# EUROPEAN PATENT SPECIFICATION

(11) **EP 1 577 581 B1**
(45) Date of publication and mention of the grant of the patent: **06.11.2013**
(21) Application number: 03768373.7
(22) Date of filing: 26.12.2003
(51) Int. Cl.: F16H 3/66

(54) **AUTOMATIC SPEED CHANGER**
AUTOMATISCHER DREHZAHLÄNDERER
MECANISME DE CHANGEMENT DE VITESSE AUTOMATIQUE

(30) Priority: 27.12.2002 JP 2002379262
(43) Date of publication of application: 21.09.2005
(73) Proprietor: AISIN AW CO., LTD., Anjo-shi, Aichi-ken 444-1192 (JP)
(72) Inventor: KAYAMA, Kazumichi, c/o Aisin Aw Co., Ltd., Anjo-shi, Aichi-ken 444-1192 (JP); SUGIURA, Nobutada, c/o Aisin Aw Co., Ltd., Anjo-shi, Aichi-ken 444-1192 (JP); YAMAGUCHI, Shundo, c/o Aisin Aw Co., Ltd., Anjo-shi, Aichi-ken 444-1192 (JP); SUGIMOTO, Tatsuya, c/o Aisin Aw Co., Ltd., Anjo-shi, Aichi-ken 444-1192 (JP); INAGAKI, Tomochika, c/o Aisin Aw Co., Ltd., Anjo-shi, Aichi-ken 444-1192 (JP)
(74) Representative: Vossius & Partner
(86) International application number: PCT/JP2003/017066
(87) International publication number: WO 2004/061330

(56) References cited:
- JP-A- 2001 082 555
- JP-A- 2002 188 694
- US-A- 5 525 117
- US-A- 6 139 463
- US-A1- 2002 142 880
- US-B1- 6 176 802

## Description

The present invention relates to an automatic transmission mounted on a vehicle and so forth, and more specifically, it relates to the construction configuration of an automatic transmission wherein multiple speed levels are enabled by being capable of inputting reduced rotation into one of the rotation components of a planetary gear unit.

JP 2001-082555 A relates to an automatic transmission according to the preamble of claim 1.

Generally, an automatic transmission on board a vehicle and so forth comprises a planetary gear unit with two rows of linked planetary gears, and planetary gears that can output the reduced rotation wherein the rotation speed of the input shaft is reduced (for example, JP 4-125345 A). This achieves, for example, six forward speeds and one reverse speed, by being capable of input of reduced rotation from the planetary gear via a clutch to, for example, one rotation component of a planetary gear unit that has four rotation components. Further, in the case of fifth speed forward, for example, when the rotation of the input shaft is input together into two of the rotation components of the planetary gear unit by engaging the two clutches, this fifth speed forward can be become directly coupled, with a rotation similar to that of the input shaft (see JP 2000-274498 A, for example).

The above-described automatic transmission comprises two clutches for inputting the rotation of the input shaft into two of the rotation components of the aforementioned planetary gear unit, and a planetary gear for outputting the reduced rotation into the rotation components of this planetary gear unit. However, if those two clutches or the oil servos that control the engaging of those clutches are configured between the planetary gear unit and the planetary gear, the unit for transmitting the reduced rotation of this planetary gear to the rotation components of the planetary gear unit becomes long in the axial direction.

That the unit that transmits the reduced rotation becomes long means that the unit transmitting a large torque is elongated, and an elongated unit that can withstand the large torque requires providing a relatively thick material that is elongated, preventing a compact automatic transmission. Further, the weight of such a unit would be heavier, and not only would a lightweight automatic transmission be prevented, but inertia (force of inertia) would increase, reducing the controllability of the automatic transmission and speed change shocks would result more easily.

Further, for example, in order to engage or disengage the reduced rotation output to the planetary gear unit from the planetary gear, a clutch or brake must be provided. In the case that a clutch is provided, this clutch and the above-described two clutches, in other words three clutches are necessary. In general, a clutch has a drum-shaped member (clutch drum) that transmits the input rotation into the friction plates, and therefore, for example with a problem such as relative rotation, supplying oil pressure to the oil compartment of the oil pressure servo of the clutch must be supplied from the mid-section of the automatic transmission.

However, for example if those three clutches are configured on one side in the direction of the axis of the planetary gear unit, oil lines for supplying oil pressure to three oil pressure servos are constructed for example in triplicate in the mid-section of the automatic transmission, and the configuration of the oil lines become complicated.

Accordingly, the object of the present invention is to provide an automatic transmission that configures a reduced rotation output means on one side in the axial direction of the planetary gear unit, and configures a first clutch and a second clutch in the axial direction on the other side of the planetary gear unit, and hence solve the problems mentioned above.

### Disclosure of Invention

The present invention according to Claim 1 is an automatic transmission comprising: an input shaft that rotates based on output rotation of a drive source; a planetary gear unit comprised of first, second, third, and fourth rotation components; reduced rotation output means capable of output of a reduced rotation to the first rotation component from the input shaft wherein the rotation speed is reduced; a first clutch that links the input shaft and the second rotation component in a manner capable of disengaging; a second clutch that links the input shaft and the third rotation component in a manner capable of disengaging; and an output unit for outputting the rotation of the fourth rotation component into the drive wheel transmitting device; wherein at least five forward speed levels and one reverse speed level can be achieved, and wherein a direct linking level can be achieved wherein the rotations of the input shaft are output without change by the first clutch and the second clutch being engaged while at fifth speed forward at least, or higher; and wherein the reduced rotation output means is configured on one side in the axial direction of the planetary gear unit, and the output member is configured between the planetary gear unit and the reduced rotation output means; and wherein the first clutch and the second clutch are configured on the other side in the axial direction of the planetary gear unit.

With the present invention according to claim 1, the planetary gear unit is a multiple type planetary gear, comprising a first sun gear, a long pinion which meshes with the first sun gear, a short pinion which meshes with the long pinion, a carrier for rotationally supporting the long pinion and the short pinion, a second sun gear meshing with the short pinion, and a ring gear meshing with the long pinion; wherein the first rotation component is the second sun gear capable of inputting the reduced rotation of the reduced rotation output means; and wherein the second rotation component is the first sun gear capable of inputting rotations of the input shaft by the engaging of the first clutch, and which is capable of being fixed by the retaining of the first brake; and wherein the third rotation component is the carrier capable of inputting the rotations of the input shaft by the engaging of the second clutch, and which is capable of being fixed by the retaining of a second brake; and wherein the fourth rotation component is the ring gear linked to the output member.

Accordingly, while providing an automatic transmission directly coupled when at fifth speed forward, which can achieve at least five forward speed levels and one reverse speed level, the reduced rotation output means and the planetary gear unit can be configured closer together, compared to the case wherein a clutch is configured between the reduced rotation output means and the planetary gear unit for example, and the transmitting member for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced. Further, in the case that for example the reduced rotation output means has a clutch, three clutches will be configured, but compared to the case wherein three clutches are configured on one side of the planetary gear unit, the construction of an oil line to provide oil to the oil pressure servos for these clutches can be made easily, and the manufacturing process can be simplified and the costs brought down.

Further, because the output unit is configured in the axial direction between the planetary gear unit and the reduced speed rotation output means, the output unit can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the output unit is mounted to match the drive wheel transmission mechanism. Because of this, particularly in the case of an FF vehicle, the interference toward the front wheels is reduced, and the mountability on a vehicle can be improved, such the steering angle being greatly improved, for example.

The present invention according to Claim 2 is configured such that reduced rotation output means comprises a reducing planetary gear that has a reduced rotation component that rotates at the reduced rotation and a third engaging component that can operate the rotation of the specified component of this reducing planetary gear.

The present invention according to Claim 3 is configured such that the third engaging component is an engaging component which engages in the first speed forward.

With the present invention according to Claim 4, the reducing planetary gear comprises an input rotation component that inputs at all times the rotation of the input shaft, a rotation fixing component that fixes the rotation, and a reduced rotation component that can reduce rotation speed based on the rotation of this input rotation component and this rotation fixing component; and the third engaging component is a third clutch that links the reduced rotation component and the first rotation component so as to be capable of disengaging.

Accordingly, because the reduced rotation output means comprises the third clutch, three clutches will be configured, but because the reduced rotation output means is configured on one side in the axial direction of the planetary gear unit, and the first clutch and the second clutch are configured on the other side in the axial direction of planetary gear unit, compared to the case wherein these three clutches are configured on one side of the planetary gear unit, the construction of an oil line to provide oil to the oil pressure servos for these clutches can be made easily, and the manufacturing process can be simplified and the costs brought down.

With the present invention according to Claim 5, the third clutch is configured on the opposite side in the axial direction of the reducing planetary gear unit from the planetary gear; and the third clutch comprises an oil pressure servo that pressurizes a friction member, a drum unit that is constructed integrally with the oil pressure servo and opens toward the direction of the reducing planetary gear, and a hub unit; wherein the oil pressure servo of the third clutch is disposed on a boss portion extending from the case, and oil is supplied to the oil pressure servo from an oil path provided to the boss portion.

The present invention according to Claim 6 is configured with the reducing planetary gear comprising an input rotation component that can input the rotation of the input shaft, a rotation fixing component that fixes the rotation, and a reduced rotation component that can reduce rotation speed based on the rotation of this input rotation component and this rotation fixing component; wherein the third engaging component is a third clutch that links the input shaft and the input rotation component so as to be capable of disengaging.

Accordingly, because the reduced rotation output means comprises the third clutch, three clutches will be configured, but because the reduced rotation output means is configured on one side in the axial direction of the planetary gear unit, and the first clutch and the second clutch are configured on the other side in the axial direction of planetary gear unit, compared to the case wherein these three clutches are configured on one side of the planetary gear unit, the construction of an oil line to provide oil to the oil pressure servos for these clutches can be made easily, and the manufacturing process can be simplified and the costs brought down.

Further, because the third clutch links the input shaft and the input rotation component so as to be capable of disengaging, the burden on the third clutch can be reduced, and the third clutch can be made more compact, compared with for example the case wherein the third clutch makes the input rotation component and the first rotation component capable of disengaging.

With the present invention according to Claim 7, the third clutch comprises an oil pressure servo that pressurizes a friction member, a drum unit that is constructed integrally with the oil pressure servo, and a hub unit; wherein the hub unit is linked with the input rotation component; and wherein the drum unit is linked to the input shaft, and is positioned so as to open toward the direction of the reducing planetary gear.

Also, the input rotation component which rotates at a high revolution when at sixth speed forward can be linked to the hub unit which has a smaller diameter than the drum unit, and compared to the case wherein it is linked to the drum unit, the centrifugal force can be reduced, and the decreaseof controllability of the third clutch when engaging and releasing can be prevented.

The present invention according to Claim 8 is configured with the oil pressure servo of the third clutch disposed on the input shaft; wherein oil is supplied to the oil pressure servo of the third clutch via an oil path provided within the input shaft.

The present invention according to Claim 9 is configured with the oil pressure servo of the third clutch disposed on a boss portion extending from the case; wherein oil is supplied to the oil pressure servo of the third clutch via an oil path provided within the boss portion.

The present invention according to Claim 10 is configured with the reducing planetary gear comprising an input rotation component that inputs the rotation of the input shaft, a fixing rotation component that fixes the rotation, and a reduced rotation component that can reduce rotation speed based on the rotation of the input rotation component and the rotation fixing component; wherein the third engaging component is a third brake that is capable of fixing the fixing rotation component.

With the present invention according to Claim 11, the third brake is configured on the opposite side in the axial direction of the reducing planetary gear unit from the planetary gear; and the oil pressure servo of the third brake is configured on the edge wall of the case.

The present invention according to Claim 12 is configured such that the first clutch is a clutch that engages at the first speed reverse.

Accordingly, when engaged at the reverse speed level, the unit (particularly the transmitting member) for the reduced rotation of the reduced rotation output means rotates in a reverse rotation, while there may be cases wherein by engaging this first clutch, the unit connecting this first clutch and the second rotation component rotates at the rotation of the input shaft, and some cases may occur wherein the revolution difference thereof may be large. However, because this first clutch is located on the opposite side of the reduced rotation output means via the planetary gear unit, that is to say, the unit with a reverse rotation (particularly the transmitting member) and the unit with the rotation of the input shaft can be configured apart, and compared with the case wherein for example those units are configured in contact with a multi-axial construction, the decreased efficiency of the automatic transmission resulting from the relative rotation between those units can be prevented.

With the present invention according to Claim 13, the first clutch is configured adjoined to the planetary gear unit; wherein the first clutch comprises a friction member and an oil pressure servo that pressurizes this friction member, and a drum unit and a hub unit that are constructed integrally with this oil pressure servo; and wherein the drum unit is linked with the input shaft, and the hub unit is linked with the second rotation component; and wherein the second clutch is configured on the opposite side in the axial direction of the reducing planetary gear unit from the first clutch; and wherein the second clutch comprises a friction member and an oil pressure servo that pressurizes this friction member, and a drum unit and a hub unit that are constructed integrally with this oil pressure servo; and wherein the drum unit is linked with the input shaft, and the hub unit is linked with the third rotation component through the outer circumference side of the first clutch.

The present invention according to Claim 14 further comprises a first brake capable of retaining rotations of the second rotation component, and a second brake capable of retaining rotations of the third rotation component; wherein the first brake is configured on the outer circumference side of the first clutch; and wherein the second brake is configured on the outer circumference side of the planetary gear unit.

The present invention according to Claim 15 is configured with the first brake comprising a friction member and an oil pressure servo that pressurizes this friction member; wherein the oil pressure servo of the first brake is configured at the outer circumference side in the radial direction of the oil pressure servo of the first clutch, at a position so as to overlap at least a part in the axial direction; and wherein the friction member of the first brake is linked to the case and the hub unit of the first clutch.

With the present invention according to Claim 16, the second brake comprises a friction member and an oil pressure servo that pressurizes this friction member; and the oil pressure servo of the second brake is disposed on case material extended so as to rotatably support the output member; and wherein the friction member of the second brake is disposed on the outer circumference side of the planetary gear unit.

With the present invention according to Claim 17, a transmitting member that links the reduced rotation component of the planetary gear or the third engaging component and the first rotation component of the planetary gear unit is linked together while passing through the inner circumference side of the output unit.

The present invention according to Claim 18 further comprises a differential unit for outputting rotations to driving wheels, and a counter shaft unit for engaging the differential unit, wherein the output member is a counter gear meshing with the counter shaft unit.

The present invention according to Claim 19 is configured such that wherein, in a speed line chart illustrating the revolutions of the first, second, third, and fourth rotation components with the vertical axis, and the gear ratio of the first, second, third, and fourth rotation components with the horizontal axis in a corresponding manner; the first rotation component to which the reduced rotation is input is positioned at the farthest edge in the horizontal direction, with the fourth rotation component linked to the output member, the third rotation component, and the second rotation component, corresponding in that order.

The present invention according to Claim 20 is configured wherein, in the first speed forward, reduced rotation is input to the first rotation component from the reduced rotation output means, and the second brake is retained; and wherein, in the second speed forward, reduced rotation is input to the first rotation component from the reduced rotation output means, and the first brake is retained; and wherein, in the third speed forward, reduced rotation is input to the first rotation component from the reduced rotation output means, and the first clutch is engaged; and wherein, in the fourth speed forward, reduced rotation is input to the first rotation component from the reduced rotation output means, and the second clutch is engaged; and wherein, in the fifth speed forward, the first clutch and the second clutch are both engaged; and wherein, in the sixth speed forward, the second clutch is engaged and the first brake is retained; and wherein, in the first speed reverse, the first clutch is engaged and the second brake is retained; whereby six forward speed levels and one reverse speed level can be achieved.

### Brief Description of the Drawings

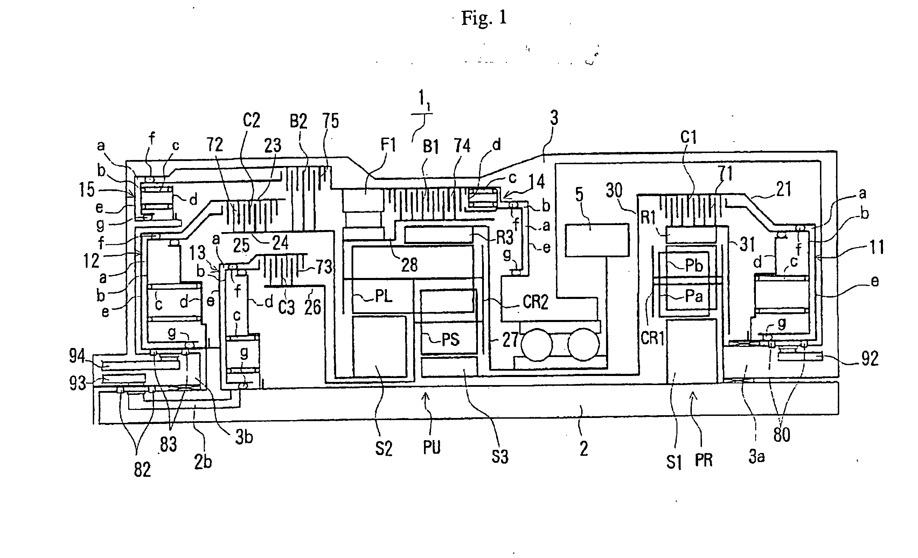

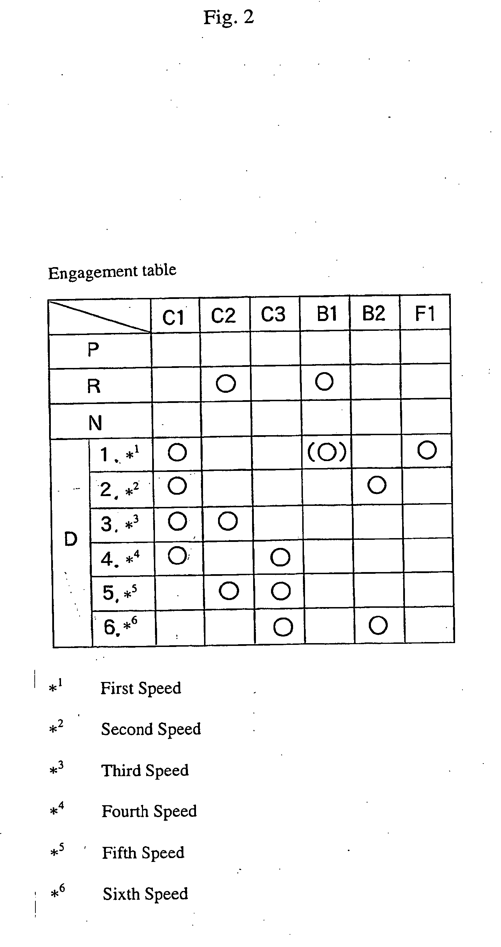

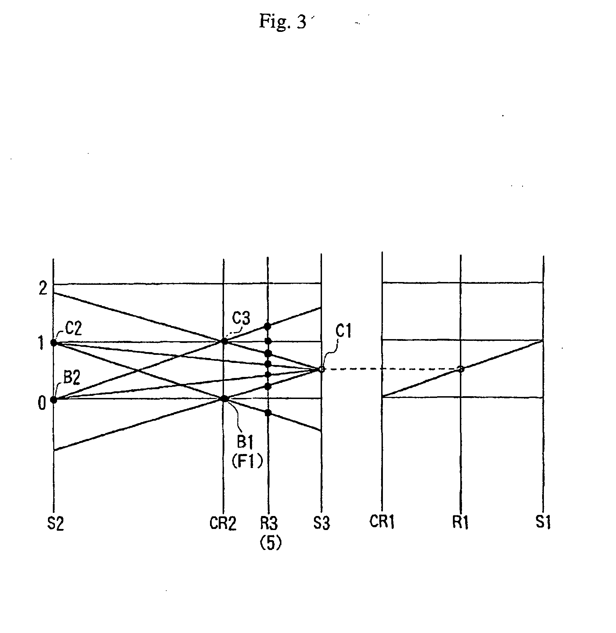

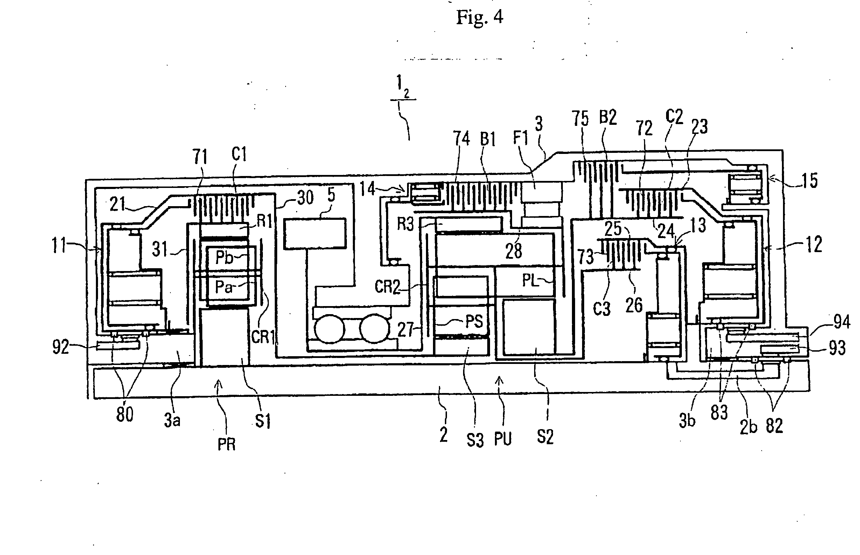

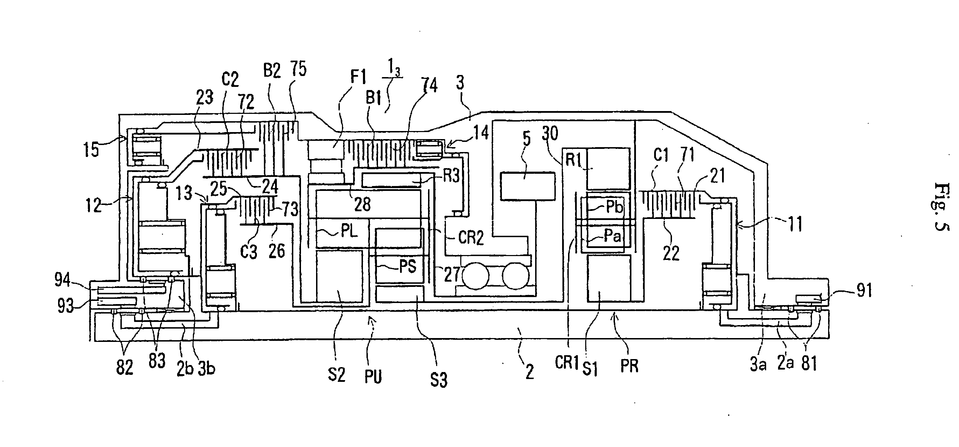

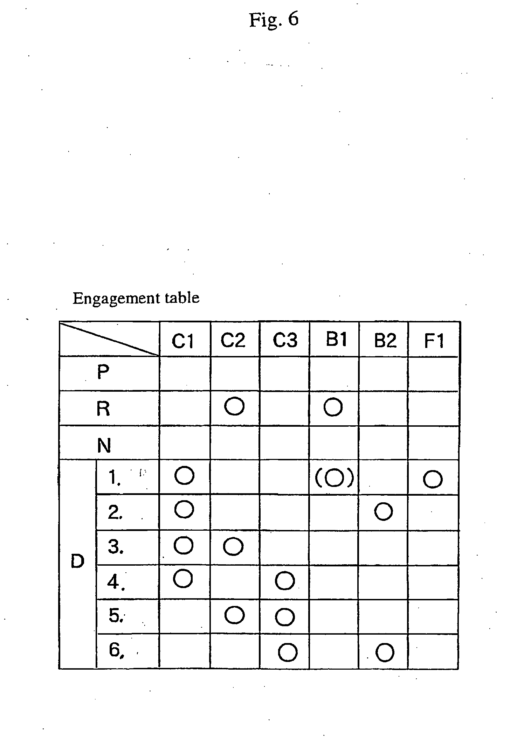

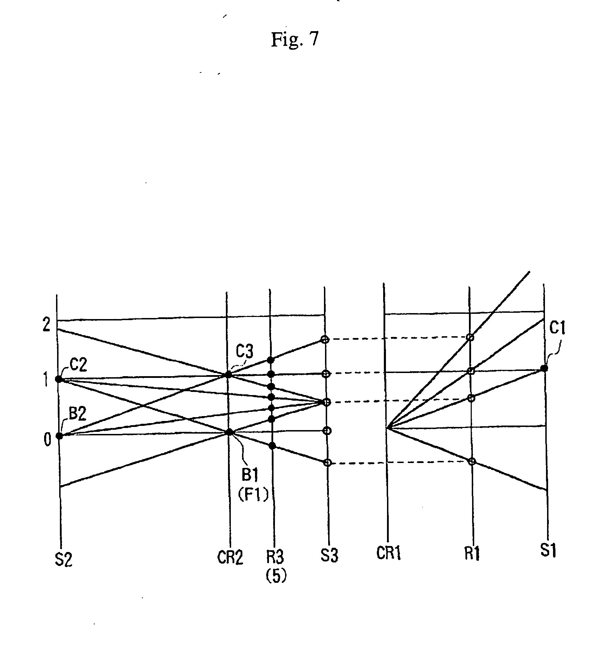

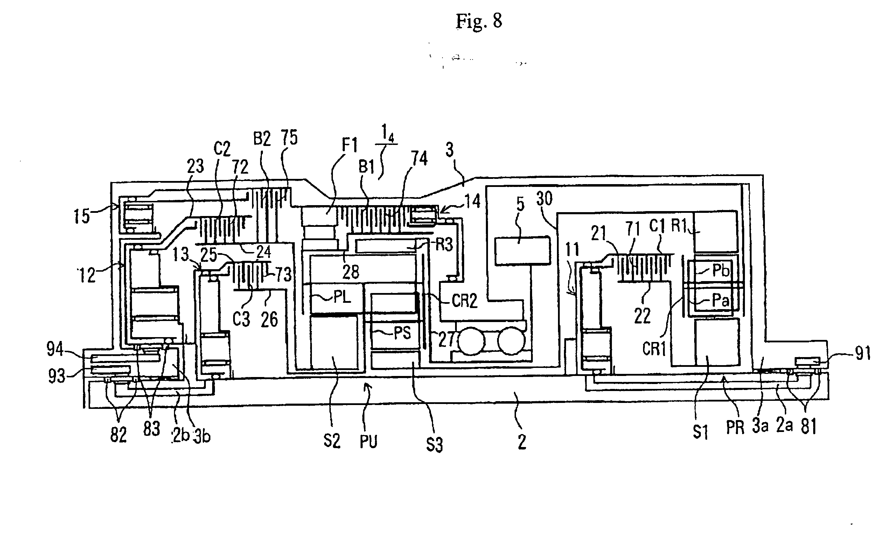

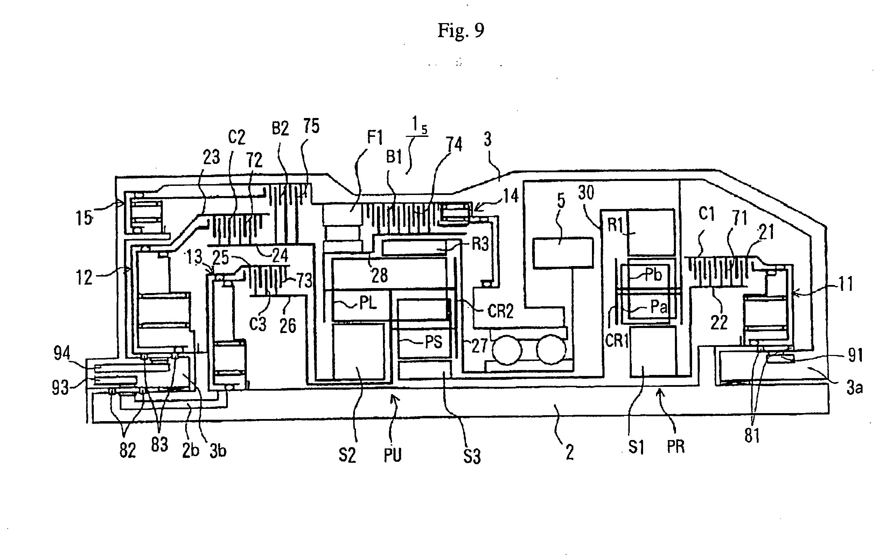

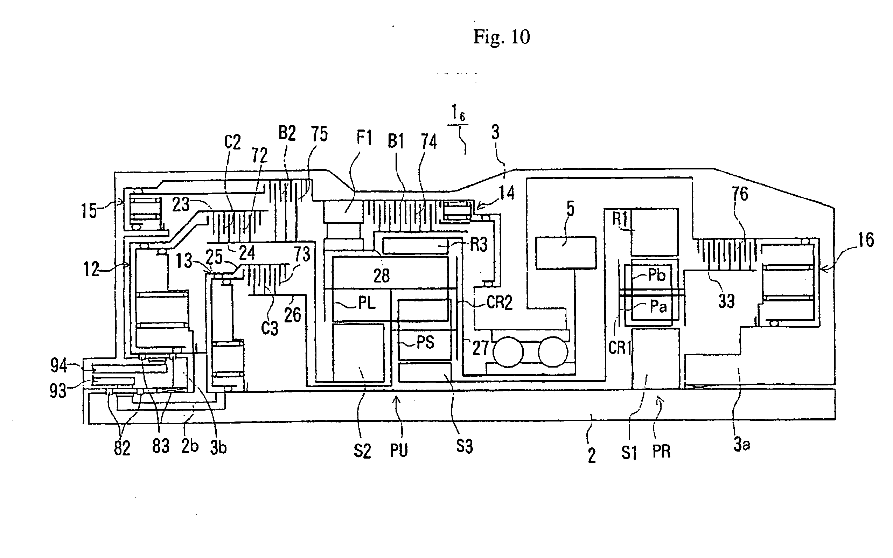

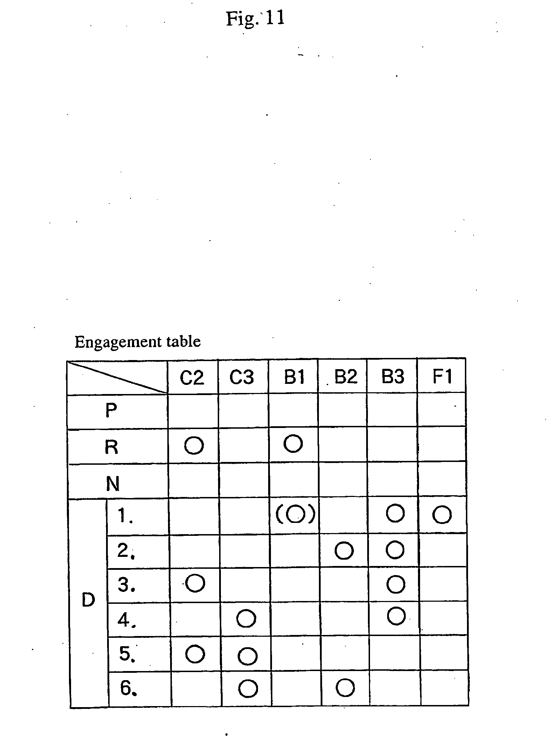

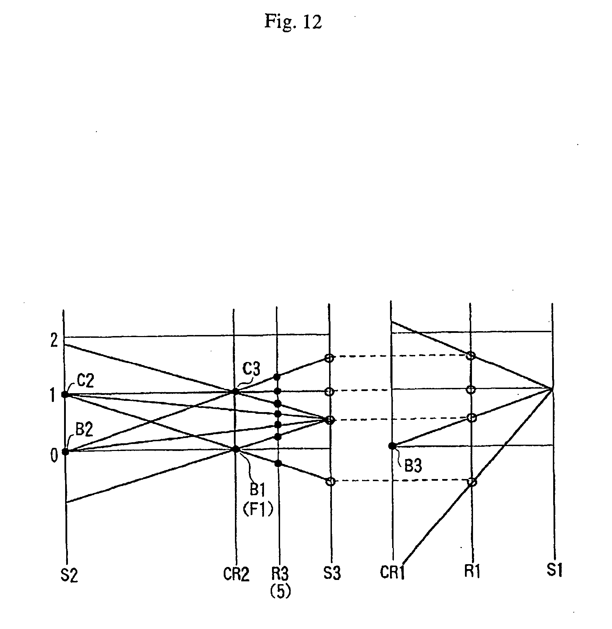

Fig. 1 is a schematic cross-sectional diagram illustrating an automatic transmission device of an automatic transmission relating to a first embodiment, Fig. 2 is a operational table of an automatic transmission relating to the first embodiment, Fig. 3 is a speed line diagram of an automatic transmission relating to the first embodiment, Fig. 4 is a schematic cross-sectional diagram illustrating an automatic transmission device of an automatic transmission relating to a second embodiment, Fig. 5 is a schematic cross-sectional diagram illustrating an automatic transmission device of an automatic transmission relating to a third embodiment, Fig. 6 is a operational table of an automatic transmission relating to the third embodiment, Fig. 7 is a speed line diagram of an automatic transmission relating to the third embodiment, Fig. 8 is a schematic cross-sectional diagram illustrating an automatic transmission device of an automatic transmission relating to a fourth embodiment, Fig. 9 is a schematic cross-sectional diagram illustrating an automatic transmission device of an automatic transmission relating to a fifth embodiment, Fig. 10 is a schematic cross-sectional diagram illustrating anautomatic transmission device of an automatic transmission relating to a sixth embodiment, Fig. 11 is a operational table of an automatic transmission relating to the sixth embodiment, and Fig. 12 is a speed line diagram of an automatic transmission relating to the sixth embodiment.

### Best Mode for Carrying Out the Invention

### <First Embodiment>

The first embodiment relating to the present invention will be described, following Fig. 1 through Fig. 3 below. Fig. 1 is a schematic cross-sectional diagram illustrating the automatic transmission device of an automatic transmission relating to the first embodiment, Fig. 2 is a operational table of an automatic transmission relating to the first embodiment, and Fig. 3 is a speed line diagram of an automatic transmission relating to the first embodiment.

An automatic transmission relating to the first embodiment according to the present invention has an automatic transmission device 1₁ as illustrated in Fig. 1. This is particularly favorable for an FF (front engine, front wheel drive) vehicle, and has a case comprising a housing case, not illustrated, and a transmission case 3, and within this housing case is configured a torque converter, not illustrated, within this transmission case 3 is configured an automatic transmission device 1₁, a counter shaft unit (drive wheel transmission mechanism), not illustrated, and a differential unit (drive wheel transmission mechanism).

This torque converter is configured, for example, on the axis that is centered on an input shaft 2 of the automatic transmission device 1₁, which is on the same axis as the output shaft of the engine(not illustrated), and this automatic transmission device 1₁ is configured on the output shaft of this engine, in other words, the axis that is centered on the input shaft 2. Further, the above-mentioned counter shaft unit is configured on a counter shaft (not illustrated) on an axis that is parallel to the input shaft 2, and the above-mentioned differential unit is configured so as to has a lateral axle, not illustrated, on an axis that is parallel to this counter shaft.

Next, an automatic transmission device 1₁ of an automatic transmission relating to the first embodiment will be described, with reference to Fig. 1. As illustrated in Fig. 1, the automatic transmission device 1₁ comprises a planetary gear unit PU and a planetary gear (reduced rotation output means, reducing planetary gear) PR on the input shaft 2. This planetary gear unit PU is a multiple-type planetary gear, which has a sun gear S2 (the second rotation component), a carrier CR2 (the third rotation component), a ring gear R3 (the fourth rotation component), and a sun gear S3 (the first rotation component), as the four rotation components; wherein the carrier CR2 has a long pinion PL that meshes with a sun gear S2 and the ring gear R3, and a short pinion PS that meshes with the sun gear S3, which are meshed to one another. Further, the above-mentioned planetary gear PR is a double pinion planetary gear that has a carrier CR1, wherein a pinion Pb is meshed with a ring gear R1 and a pinion Pa is meshed with a sun gear S1, which are meshed one to another.

On the above-mentioned input shaft 2 is provided a boss unit 3a that is extended on one edge of the case 3 and formed in sleeve form on this input shaft 2, and on this boss unit 3a is configured a multi-disc clutch C1 (reduced rotation output means, the third engaging component, the third clutch) comprising an oil pressure servo 11, a friction plate 71, and a drum-shaped member 21 that forms a clutch drum.

This oil pressure servo 11 is constructed from a piston unit b for pressurizing the friction plate 71, the drum-shaped member 21 that has a cylinder unit e, an oil chamber "a" which is formed by sealing between this piston unit b and this cylinder unit e with seal rings f and g, a return spring c that energizes this piston unit b towards this oil chamber "a", and a return plate d that absorbs the energy of this return spring c.

Now, for the following descriptions, each oil pressure servo shall be considered as being constructed similarly from an oil chamber "a", a piston unit b, a return spring c, a return plate d, a cylinder unit e, and seal rings f and g, and as such, description thereof will be omitted.

The oil chamber "a" of this oil pressure servo 11 is linked to an oil line 92 of the boss unit 3a, and this oil line 92 is linked to an oil pressure control device not illustrated. In other words, because the above-mentioned oil pressure servo 11 is configured on the boss unit 3a, an oil line from the oil pressure control unit not illustrated to the oil chamber "a" of the oil pressure servo 11 is constructed by one set of seal rings 80 to seal between this boss unit 3a and the drum-shaped member 21.

Further, the above-mentioned boss unit 3a is supported by the above-mentioned drum-shaped member 21 so as to be capable of rotating, and on the inner circumference side of the front edge of this drum-shaped member 21 is configured the friction plate 71 of the clutch C1 which is capable of engaging by the oil pressure servo 11 for the clutch C1, by being splined. The inner circumference side of the friction plate 71 of this clutch C1 is splined to the hub unit 31 where the ring gear R1 is formed, and this hub unit 31 is supported by the boss unit 3a so as to be capable of rotating. Further, the carrier CR1 has the pinion Pa and the pinion Pb, the pinion Pb meshes with the above-mentioned ring gear R1, and the pinion Pa meshes with the sun gear S1 which is connected to the input shaft 2. This carrier CR1 is secured to the boss unit 3a of the case 3 via a side plate, and the sun gear S1 is connected to the input shaft 2.

Also, the drum-shaped member 21 wherein the friction plate 71 of the above-mentioned clutch C1 is splined to a transmitting member (the reduced rotation output means) 30 that transmits the rotation of the ring gear R1 when this clutch C1 is engaged, and on the other side of this transmitting member 30 the sun gear S3 of the above-mentioned planetary gear unit PU is connected.

On the other hand, on the other edge of the input shaft 2 (left side of diagram) a multi-disc clutch C3 (the second clutch) is configured that comprises an oil pressure servo 13, a friction plate 73, a drum-shaped member 25 that forms a clutch drum, and a hub unit 26. Further, on the boss unit 3b that is elongated on the other side of the case 3 on the opposite side from the above-mentioned boss unit 3a, and is provided on the input shaft 2 in sleeve form, is configured a multi-disc clutch C2 (the first clutch) comprising an oil pressure servo 12, a friction plate 72, a drum-shaped member 23 that forms a clutch drum, and a hub unit 24. Further, on the outer circumference side of this clutch C2 is configured a multi-disc brake B2 comprising an oil pressure servo 15 and a friction plate 75, such that at least a part thereof overlaps the oil pressure servo 12 in the axial direction.

The oil chamber "a" of this oil pressure servo 13 is linked to an oil line 2b formed on this above-mentioned input shaft 2, and this oil line 2b is linked through an oil line 93 of the above-mentioned boss unit 3b, and this oil line 93 is linked through to an oil pressure control device, not illustrated. In other words, the above-mentioned oil pressure servo 13 has an oil line constructed from the oil pressure control device, not illustrated, to the oil chamber "a" of the oil pressure servo 13, by one set of seal rings 82 that seal between the boss unit 3b of the case 3 and the input shaft 2.

The oil chamber "a" of the above-mentioned oil pressure servo 12 is linked through to an oil line 94 of the above-mentioned boss unit 3b, and this oil line 94 is linked through to the oil pressure control device not illustrated. In other words, for the above-mentioned oil pressure servo 12, an oil line is constructed from the oil pressure control device not illustrated to the oil chamber "a" of the oil pressure servo 12, by one set of seal rings 83 that seal between the boss unit 3b of the case 3 and the drum-shaped member 23.

The drum-shaped member 25 of the above-mentioned clutch C3 is connected to the input shaft 2, and on the front edge of the inner circumference side of this drum-shaped member 25 is configured a friction plate 73 of the clutch C3 that is capable of engaging by the oil pressure servo 13 for the clutch C3, by being splined. On the inner circumference side of the friction plate 73 of this clutch C3 is configured a hub unit 26 by being splined, and this hub unit 26 is connected to the carrier CR2.

The drum-shaped member 23 of the above-mentioned clutch C2 is connected to the input shaft 2, and on the front edge of the inner circumference side of this drum-shaped member 23 is configured a friction plate 72 of the clutch C2 that is capable of engaging by the oil pressure servo 12 for the clutch C2, by being splined. On the inner circumference side of the friction plate 72 of this clutch C2 is configured a hub unit 24 by being splined, and on the outer circumference side of this hub unit 24 is configured by splining a friction plate 75 of the brake B2 that is capable of engaging by the oil pressure servo 15 for the brake B2. Also, this hub unit 24 is connected to the sun gear S2.

On the other hand, on the outer circumference side of the planetary gear unit PU is configured a multi-disc brake B1 that comprises an oil pressure servo 14, a friction plate 74, and a hub unit 28. The oil pressure servo 14 is disposed on a member extended from the case 3 for rotatably supporting a later-described counter gear 5. Also, to the side plate of the carrier CR2 of this planetary gear unit PU is connected the hub unit 28 splined with the friction plate 74 of the above-mentioned brake B1, and further, this hub unit 28 is connected to the inner race of a one-way clutch F1. The sun gear S3 is meshed with the short pinion PS of this carrier CR2, and the above-mentioned sun gear S2 and ring gear R3 are meshed with the long pinion PL of this carrier CR2. Also, a linking unit 27 is connected to one edge of this ring gear R3, and this ring gear R3 is linked to the counter gear (output unit) 5 via this linking unit 27.

As described above, the planetary gear PR and the clutch C1 are configured on one side in the direction of the axis of the planetary gear unit PU, and also the clutch C2 and the clutch C3 are configured on the other side in the direction of the axis. Further, the counter gear 5 is configured between the planetary gear PR and the planetary gear unit PU, in the direction of the axis. Further, the brake B2 is configured on the outer circumference side of the clutch C2, and the brake B1 is configured on the outer circumference side of the planetary gear unit PU.

Continuing, based on the above-mentioned construction, the operations of the automatic transmission device 1₁ will be described, following Fig. 1, Fig. 2, and Fig. 3 below. Now, the vertical axis of the speed line diagram illustrated in Fig. 3 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 3) corresponds to the sun gear S3, and hereafter moving to the left direction within the diagram, the vertical axis corresponds to the ring gear R3, the carrier CR2, and the sun gear S2. Further, regarding the planetary gear PR section of this speed line diagram, the vertical axis to the farthest horizontal edge (the right side of Fig. 3) corresponds to the sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in a horizontal direction within the diagram illustrate that the rotation is transmitted from the transmitting member 30.

As illustrated in Fig. 1, the rotation of the input shaft 2 is input to the above-mentioned sun gear S2, by engaging the clutch C2, and the rotation of this sun gear S2 is capable of being fixed by retaining of the brake B2. The rotation of the input shaft 2 is input to the above-mentioned carrier CR2, by engaging the clutch C3, and this carrier CR2 can fix the rotation by the retaining of the brake B2, and further, the rotation in one direction is regulated by a one-way clutch F3.

On the other hand, the above-mentioned sun gear S1 is connected to the input shaft 2, and the rotation of this input shaft 2 is input, and further, the carrier CR1 is connected to the case 3 and the rotation thereof is fixed, and therefore the ring gear R1 rotates at a reduced speed. Further, by engaging the clutch C1, the reduced rotation of this ring gear R1 is input to the sun gear S3. Also, the rotation of the above-mentioned ring gear R3 is output to the above-mentioned counter gear 5, and is output to the drive wheel, not illustrated, via this counter gear 5, a counter shaft unit not illustrated, and a differential unit.

At first speed forward within a D (drive) range, as illustrated in Fig. 2, the clutch C1 and the one-way clutch F1 are engaged. Then, as illustrated in Fig. 3, the reduced rotation of the ring gear R1 is input to the sun gear S3 via the clutch C1 and the transmitting member 30. Further, the rotation of the carrier CR2 is controlled in one direction (the forward rotation direction) by the one-way clutch F1, in other words the carrier CR2 is prevented from rotating in the opposite direction and is fixed. Then, the ring gear R3 rotates at the forward rotation for the first speed forward, from the reduced rotation input to the sun gear S3 and the fixed carrier CR2, and that rotation is output from the counter gear 5.

Now, when downshifting (when coasting), the brake B1 is retained and the carrier CR2 is fixed, and the above-mentioned state of first speed forward is maintained while preventing the forward rotation of this carrier CR2. Further, at this first speed forward, the one-way clutch F1 prevents the carrier CR2 from rotation in the opposite direction and allows forward rotation, and therefore, switching from a non-running range to a running range and achieving the first speed forward can be accomplished more smoothly by the automatic engaging of the one-way clutch. In this case, because the sun gear S3 and the ring gear R1 are at a reduced rotation, the above-mentioned transmitting member 30 performs a relatively large torque transmission.

At second speed forward within the D (drive) range, as illustrated in Fig. 2, the clutch C1 is engaged and the brake B2 is retained. Then, as illustrated in Fig. 3, the reduced rotation of the ring gear R1 is input to the sun gear S3 via the clutch C1 and the transmitting member 30, and the rotation of the sun gear S2 is fixed by the brake B2. By doing so, the carrier CR2 rotates at slightly reduced rotation, and from the reduced rotation input to the sun gear S3 and this slightly reduced rotation of the carrier CR2, the ring gear R3 rotates at the forward rotation for the second speed forward, and this rotation is output to the counter gear 5. Now, also in this case, because the sun gear S3 and the ring gear R1 are at a reduced rotation, the above-mentioned transmitting member 30 performs a relatively large torque transmission.

At third speed forward within the D (drive) range, as illustrated in Fig. 2, the clutch C1 and the clutch C2 are engaged. Then, as illustrated in Fig. 3, the reduced rotation of the ring gear R1 is input to the sun gear S3 via the clutch C1 and the transmitting member 30, and also the rotation of the input shaft 2 is input to the sun gear S2 by engaging the clutch C2. Further, by the rotation of the input shaft 2 input to the sun gear S2 and by the decreased rotation of the sun gear S3, the fixed carrier CR2 has a slightly larger reduced rotation than the reduced rotation of this sun gear S3. Further, from the input rotation of the sun gear S2 and the reduced rotation of the sun gear S3, the ring gear R3 rotates at the forward rotation for third speed forward, and this rotation is output from the counter gear 5. In this case also, because the sun gear S3 and the ring gear R1 are at a reduced rotation, the above-mentioned transmitting member 30 performs a relatively large torque transmission.

At fourth speed forward within the D (drive) range, as illustrated in Fig. 2, the clutch C1 and the clutch C3 are engaged. Then, as illustrated in Fig. 3, the reduced rotation of the ring gear R1 is input to the sun gear S3 via the clutch C1 and the transmitting member 30, and also the rotation of the input shaft 2 is input to the carrier CR2 via the clutch C3. Then, by the rotation of input shaft 2 input to the carrier CR2 and by the reduced rotation of the sun gear S3, the ring gear R3 rotates at the forward rotation for fourth speed forward, and this rotation is output from the counter gear 5. In this case also, because the sun gear S3 and the ring gear R1 are at a reduced rotation, the above-mentioned transmitting member 30 performs a relatively large torque transmission.

At fifth speed forward within the D (drive) range, as illustrated in Fig. 2, the clutch C2 and the clutch C3 are engaged. Then, as illustrated in Fig. 3, the rotation of input shaft 2 is input to the carrier CR2 via the clutch C3, and also the rotation of the input shaft 2 is input to the sun gear S2 via the clutch C2. Then, from the rotation of the input shaft 2 input to the sun gear S2, and the rotation of the input shaft 2 input to the carrier CR2, the ring gear R3 becomes a direct connect rotation, and rotates at the forward rotation for fifth speed forward which has the same rotation as the input shaft 2, and this rotation is output from the counter gear 5.

At sixth speed forward within the D (drive) range, as illustrated in Fig. 2, the clutch C3 is engaged and the brake B2 is retained. Then, as illustrated in Fig. 3, the rotation of the input shaft 2 is input to the carrier CR2 via the clutch C3, and rotation of the sun gear S2 is fixed by retaining of the brake B2. Then, from the rotation of the input shaft 2 input to the carrier CR2 and from the fixed sun gear S2, the ring gear R3 rotates at the overdrive rotation for sixth speed forward, and this rotation is output from the counter gear 5.

At first speed reverse within an R (reverse) range, as illustrated in Fig. 2, the clutch C2 is engaged and the brake B1 is retained. Then, as illustrated in Fig. 3, the rotation of the input shaft 2 is input to the sun gear S2 by engaging the clutch C2, and also the rotation of the carrier CR2 is fixed by retaining the brake B1. Then from the rotation of the input shaft 2 input to the sun gear S2 and from the fixed carrier CR2, the ring gear R3 rotates in the opposite direction as the first speed reverse, and this rotation is output from the counter gear 5.

At the P (parking) range and the N (neutral) range, particularly the clutch C1, clutch C2, and clutch C3 are released, the transmission movement between the input shaft 2 and the counter gear 5 is disconnected, and the automatic transmission device 1₁ as a whole is in an idle state-(neutral state).

As described above, according to the automatic transmission device 1₁ relating to the present invention, the planetary gear PR and the clutch C1 are configured on one side in the axial direction of the planetary gear unit PU, and the clutch C2 and the clutch C3 are configured on the other side in the axial direction of the planetary gear unit PU, therefore an automatic transmission can be provided that will achieve six forward speeds and one reverse speed with direct coupling at fifth speed forward. For example, compared to the case wherein the clutch C2 or clutch C3 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C1 is configured on one side in the axial direction of the planetary gear unit PU, and the clutch C2 and the clutch C3 are configured on the other side in the axial direction of the planetary gear unit PU, therefore compared to the case wherein, for example, the three clutches C1, C2, C3 are configured on one side of the planetary gear unit PU, the construction of an oil line (for example, 2b, 92, 93, 94) to provide oil to the oil pressure servos 11, 12, and 13 for these clutches C1, C2, and C3 can be made easily, and the manufacturing process can be simplified and the costs brought down.

Further, because the oil pressure servo 13 is provided on the input shaft 2, one set of the seal rings 82 seal the case 3 and supply oil to the oil line 2b provided within the input shaft 2, and therefore oil can be supplied to the oil chamber "a" of the oil pressure servo 13 without providing seal rings between, for example, the input shaft 2 and the oil pressure servo 13. Further, the oil pressure servos 11 and 12 can each supply oil from the boss units 3a and 3b provided from the case 3, without passing through other units for example, in other words, can supply oil by providing one set of seal rings 80 and 83. Therefore, oil can be supplied simply by providing one set of seal rings 82, 80, and 83 each for the oil pressure servos 11, 12, and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the transmitting member 30 rotates in a reverse rotation, and while the hub unit 24 that connects this clutch C2 and the sun gear S2 has the same rotation as the input shaft 2 by engaging this clutch C2, there may be cases wherein the rotation difference of the transmitting member 30 and the hub unit 24 becomes large, but because this clutch C2 is located on the opposite side of the planetary gear PR, via the planetary gear unit PU, the transmitting member 30 and the hub unit 24 can be configured apart from one another. Compared to the case wherein, for example, those parts come in contact due to a multi-axial construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, the automatic transmission device 1₁ according to the present embodiment is a transmission device that is directly coupled at fifth speed forward. Therefore, at first speed forward or fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

### <Second Embodiment>

The second embodiment, which is a partial modification of the first embodiment will be described, with reference to Fig. 4. Fig. 4 is a schematic cross-sectional diagram illustrating the automatic transmission device of an automatic transmission relating to the second embodiment. Now, components of the second embodiment which are the same as those of the first embodiment will be denoted with the same reference numerals, and description thereof omitted, except for partial modifications.

As Fig. 4 illustrates, the automatic transmission device 1₂ of the automatic transmission relating to the second embodiment has the input side and output side backwards from that of the automatic transmission device 1₁ of the automatic transmission of the first embodiment (see Fig. 1). Further, the actions of the first speed forward through the sixth speed forward and the first speed reverse is similar (see Fig. 2 and Fig. 3).

Accordingly, and similar to the first embodiment, according to the automatic transmission device 1₂ relating to the present invention, the planetary gear PR and the clutch C1 are configured on one side in the axial direction of the planetary gear unit PU, and the clutch C2 and the clutch C3 are configured on the other side in the axial direction of the planetary gear unit PU, and therefore directly coupled when at fifth speed forward, and can achieve six forward speeds and one reverse speed. The planetary gear PR and the planetary gear unit PU can be configured closer together, compared to the case wherein for example the clutch C2 and the clutch C3 are configured between the planetary gear PR and the planetary gear unit PU, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C1 is configured on one side in the axial direction of the planetary gear unit PU, and the clutch C2 and the clutch C3 are configured on the other side in the axial direction of the planetary gear unit PU, therefore compared to the case wherein, for example, the three clutches C1, C2, and C3 are configured on one side of the planetary gear unit PU, the construction of an oil line (for example, 2b, 92, 93, 94) to provide oil to the oil pressure servos 11, 12, and 13 for these clutches C1, C2, and C3 can be made easily, and the manufacturing process can be simplified and the costs brought down.

Further, because the oil pressure servo 13 is provided on the input shaft 2, one set of the seal rings 82 seal the case 3 and supply oil to the oil line 2b provided within input shaft 2, and therefore oil can be supplied to the oil chamber "a" of the oil pressure servo 13 without providing seal rings between, for example, the input shaft 2 and the oil pressure servo 13. Further, the oil pressure servos 11 and 12 can each supply oil from the boss units 3a and 3b provided from the case 3, without passing through other units for example, in other words, can supply oil by providing one set of the seal rings 80 and 83. Therefore, oil can be supplied simply by providing one set of the seal rings 82, 80, and 83 each for the oil pressure servos 11, 12, and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the case may occur wherein the transmitting member 30 rotates in a reverse rotation, and on the other hand the hub unit 24 that connects this clutch C2 and the sun gear S2 has the same rotation as the input shaft 2 by engaging this clutch C2, and there may be cases wherein the rotation difference of the transmitting member 30 and the hub unit 24 becomes large, but because this clutch C2 is located on the opposite side of the planetary gear PR, via the planetary gear unit PU, the transmitting member 30 and the hub unit 24 can be configured apart from one another. Compared to the case wherein, for example, those parts come in contact due to a multi-axial construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatictransmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, the automatic transmission device 1₂ according to the present embodiment is a transmission device that is directly coupled at fifth speed forward. Therefore, at first speed forward or fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

### <Third Embodiment>

The third embodiment, which is a partial modification of the first embodiment will be described, with reference to Fig. 5 through Fig. 7. Fig. 5 is a schematic cross-sectional diagram illustrating the automatic transmission device of an automatic transmission relating to the third embodiment, Fig. 6 is a operational table of an automatic transmission relating to the third embodiment, and Fig. 7 is a speed line diagram of an automatic transmission relating to the third embodiment. Now, components of the third embodiment which are the same as those of the first embodiment will be denoted with the same reference numerals, and description thereof omitted, except for partial modifications.

As Fig. 5 illustrates, the automatic transmission device 1₃ of the automatic transmission relating to the third embodiment has a modified configuration of the planetary gear PR and the clutch C1, and further, a modified construction of the oil line of the oil pressure servo 11 of the clutch C1, compared to that of the automatic transmission device 1₁ of the automatic transmission of the first embodiment (see Fig. 1).

Within the automatic transmission device 1₃, the clutch C1 is configured on the planetary gear PR, on the opposite side (right side on the diagram) from the planetary gear unit PU. The front edge of the inner circumference side of the drum-shaped member 21 of this clutch C1 is splined to the friction plate 71, and the inner circumference side of this friction plate 71 is splined to the hub unit 22. The drum-shaped member 21 is connected to the input shaft 2, and the hub unit 22 is connected to the sun gear S1 of the planetary gear PR. The side plate of the carrier CR1 of this planetary gear PR is fixed and supported by the case 3. Also, the ring gear R1 is connected to the transmitting member 30, and this transmitting member 30 is connected to the sun gear S3. In other words, the ring gear R1 and the sun gear S3 are constantly in contact with one another, for example with no clutch located between, and the rotation can constantly be transmitted.

The oil compartment of this oil pressure servo 11 is linked to an oil line 2a which is formed on the input shaft 2, and this oil line 2a is provided along one edge of the case 3, and is connected to the oil line 91 of the boss unit 3a which is provided on the input shaft 2 in sleeve form, and this oil line 91 is linked to an oil pressure control unit not illustrated. Therefore, regarding the above-mentioned oil pressure servo 11, simply by providing one set of the seal rings 81 to seal between the input shaft 2 and the boss unit 3a of the case 3, an oil line is constructed from the oil pressure control device not illustrated to the oil compartment of the oil pressure servo 11.

Continuing, based on the above-mentioned construction, the operations of the automatic transmission device 1₃ will be described, following Fig. 5, Fig. 6, and Fig. 7 below. Now, similar to the above-described first embodiment, the vertical axis of the speed line diagram illustrated in Fig. 7 indicates the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 7) corresponds to the sun gear S3, and hereafter moving to the left direction within the diagram, the vertical axis corresponds to the ring gear R3, the carrier CR2, and the sun gear S2. Further, regarding the planetary gear PR section of this speed line diagram, the vertical axis to the farthest horizontal edge (the right side of Fig. 7) corresponds to the sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in a horizontal direction within the diagram illustrate that the rotation is transmitted from the transmitting member 30.

As illustrated in Fig. 5, by engaging the clutch C1, the rotation of the input shaft 2 is input to the sun gear S1. Further, the rotation of the above-mentioned carrier CR1 is fixed to the case 3, and the above-mentioned ring gear R1 decreases speed rotation based on the rotation of the input shaft 2 input to this sun gear S1 In other words, by engaging the clutch C1, the reduced rotation of the ring gear R1 is input to the sun gear S3 via the transmitting member 30.

Then, as illustrated in Fig. 6 and Fig. 7, within the planetary gear PR, at first speed forward, second speed forward, third speed forward, and fourth speed forward, the rotation of the input shaft 2 is input to the sun gear S1 by engaging the clutch C1, the reduced rotation is output to the ring gear R3 from the fixed carrier CR1, and the reduced rotation is input to the sun gear S3 via the transmitting member 30. At this time, the ring gear R1 and the sun gear S3 are rotating at a reduced speed, and therefore the above-mentioned transmitting member 30 performs a relatively large torque transmission. On the other hand, at fifth speed forward, sixth speed forward, and first speed reverse, the rotation of the sun gear S3 is input to the ring gear R1 via the transmitting member 30, and further, because the clutch C1 is released, as illustrated in Fig. 7, the sun gear S1 rotates based on each different speed level of this ring gear R1 and the fixed carrier CR1.

Now, the actions of the above-mentioned planetary gear are similar to those of the above-described first embodiment except for the above-described planetary gear PR (see Fig. 2 and Fig. 3), and accordingly, description thereof will be omitted.

As described above, according to the automatic transmission device 1₃ relating to the present invention, the planetary gear PR and the clutch C1 are configured on one side in the axial direction of the planetary gear unit PU, and the clutch C2 and the clutch C3 are configured on the other side in the axial direction of the planetary gear unit PU. Therefore, an automatic transmission can be provided that will achieve six forward speeds and one reverse speed, with direct coupling at the fifth speed forward. For example, compared to the case wherein the clutch C2 or clutch C3 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C1 is configured on one side in the axial direction of the planetary gear unit PU, and the clutch C2 and the clutch C3 are configured on the other side in the axial direction of the planetary gear unit PU, therefore compared to the case wherein, for example, the three clutches C1, C2, and C3 are configured on one side of the planetary gear unit PU, the construction of an oil line (for example, 2a, 2b, 91, 93, 94) to provide oil to the oil pressure servos 11, 12, and 13 for these clutches C1, C2, and C3 can be made easily, and the manufacturing process can be simplified and the costs brought down.

Further, because the oil pressure servos 11 and 13 are provided on the input shaft 2, one set of the seal rings 81 and 82 seal the case 3 and supply oil to the oil lines 2a, and 2b provided within the input shaft 2, and therefore oil can be supplied to the oil compartment of the oil pressure servos 11 and 13 without providing seal rings between, for example, the input shaft 2 and the oil pressure servos 11 and 13. Further, the oil pressure servo 12 can supply oil from the boss unit 3b provided from the case 3, without passing through other units for example, in other words, can supply oil by providing one set of the seal rings 83. Therefore, oil can be supplied simply by providing one set of the seal rings 81 and 82, 83 each for the oil pressure servos 11, 12, and 13, and sliding resistance from the seal rings can be minimized, and therefore the efficiency of the automatic transmission can be improved.

Further, the clutch C2 is a clutch that engages whileat the first speed reverse, therefore when this clutch C2 is engaged at the first speed reverse, the transmitting member 30 rotates in a reverse rotation, while there may be cases wherein by engaging this clutch C2, the hub unit 24 connecting this clutch C2 and the sun gear S2 rotates at the rotation of the input shaft 2, and some cases may occur wherein the revolution difference between the transmitting member 30 and the hub unit 24 may be large. However, because this clutch C2 is located on the opposite side of the planetary gear PR via the planetary gear unit PU, that is to say, the transmitting member 30 and the hub unit 24 can be configured apart, and compared with the case wherein for example those units are configured in contact with a multi-axial construction, the decreased efficiency of the automatic transmission produced by friction resulting from the relative rotation between those units can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, the automatic transmission device 1₃ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. Further, the line for transmitting this reduced rotation is a part for rotating at a high speed for example when at sixth speed forward, and therefore, as in the above-mentioned Publication, in the event that the construction links the drum of the clutch to the rotation component of the planetary gear unit, controllability is lost when engaging and releasing this clutch because the drum unit changes shape because of the centrifugal force due to the high revolutions. Therefore, it is an object of the present invention to provide an automatic transmission wherein the controllability of the clutch is not lost as a reduced rotation output means, even at a high speed revolution of the rotation component of the planetary gear unit.

Further, according to the automatic transmission device 1₃ according to the present embodiment, the clutch C1 links the input shaft 2 and the sun gear S1 so as to be capable of disengaging, therefore, compared with for example the case wherein the clutch C1 makes the ring gear R1 and the sun gear S3 capable of disengaging, the load on the clutch C1 can be reduced, and can prevent the loss of controllability of the clutch C1, and further, the clutch C1 can be made more compact.

Further, the drum-shaped member 21 of the clutch C1 is linked to the input shaft 2, and the hub unit 22 is linked to the sun gear S1 of the planetary gear PR, therefore, the hub unit 22 which has a smaller diameter than the drum-shaped member 21 can be linked for example with the sun gear S1 that rotates at a high revolution when at sixth speed forward, and compared to the case wherein the sun gear S1 is linked to the drum-shaped member, the centrifugal force can be reduced, and the decrease of controllability of the clutch C1 when engaging and releasing can be prevented.

### <Fourth Embodiment>

The fourth embodiment, which is a partial modification of the third embodiment will be described, with reference to Fig. 8. Fig. 8 is a schematic cross-sectional diagram illustrating the automatic transmission device of an automatic transmission relating to the fourth embodiment. Now, components of the fourth embodiment which are the same as those of the third embodiment will be denoted with the same reference numerals, and description thereof omitted, except for partial modifications.

As Fig. 8 illustrates, the automatic transmission device 1₄ of the automatic transmission relating to the fourth embodiment has a modified configuration of the planetary gear PR and the clutch C1, compared to that of the automatic transmission device 1₃ of the automatic transmission of the third embodiment (see Fig. 5).

With the automatic transmission device 1₄, the clutch C1 is disposed between the planetary gear PR and the planetary gear unit PU in the axial direction, specifically between the planetary gear PR and the counter gear 5. The drum-shaped member 21 is connected to one end of the input shaft 2 (at the upper right side in the drawing), and the friction plate 71 of the clutch C1 which is capable of engaging by the clutch C1 oil pressure servo 11 is disposed by splining at the inner circumference side of the front end of the drum-shaped member 21. On the inner circumference side of the friction plate 71 of this clutch C1 is configured a hub unit 22 by being splined, and this hub unit 22 is connected to the sun gear S1 of the planetary gear PR.

The carrier CR1 of the planetary gear PR has the pinion Pa and the pinion Pb, the pinion Pb meshes with the above-mentioned ring gear R1, and the pinion Pa meshes with the sun gear S1 which is connected to the hub unit 22. the carrier CR1 is fixed to the case 3 through the side plate, and the ring gear R1 is connected with the transmitting member 30. The sun gear S3 of the planetary gear unit PU is connected to the other side of the transmitting member 30.

Also, the oil chamber "a" of the oil pressure servo 11 of the clutch C1 communicates with the oil path 2a of the input shaft 2, and the oil path 2a communicates with an unshown oil pressure control device through the oil path 91 of the boss 3a. In other words, because the above-mentioned oil pressure servo 11 is configured on the input shaft 2, an oil line from the oil pressure control unit not illustrated to the oil chamber "a" of the oil pressure servo 11 is constructed by one set of seal rings 81 to seal between this boss unit 3a and the input shaft 2.

The operations of the automatic transmission device 1₄ according to the above configuration are the same as those of the third embodiment (see Fig. 6 and Fig. 7), and according, description thereof will be omitted.

As described above, according to the automatic transmission device 1₄ relating to the present invention, the planetary gear PR and the clutch C1 are configured on one side in the axial direction of the planetary gear unit PU, and the clutch C2 and the clutch C3 are configured on the other side in the axial direction of the planetary gear unit PU. Therefore, an automatic transmission can be provided that will achieve six forward speeds and one reverse speed, with direct coupling at the fifth speed forward. For example, compared to the case wherein the clutch C2 or clutch C3 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C1 is configured on one side in the axial direction of the planetary gear unit PU, and the clutch C2 and the clutch C3 are configured on the other side in the axial direction of the planetary gear unit PU, therefore compared to the case wherein, for example, the three clutches C1, C2, and C3 are configured on one side of the planetary gear unit PU, the construction of an oil line (for example, 2a, 2b, 91, 93, 94) to provide oil to the oil pressure servos 11, 12, and 13 for these clutches C1, C2, and C3 can be made easily, and the manufacturing process can be simplified and the costs brought down.

Further, because the oil pressure servos 11 and 13 are provided on the input shaft 2, one set of the seal rings 81 and 82 seal the case 3 and supply oil to the oil lines 2a, and 2b provided within the input shaft 2, and therefore oil can be supplied to the oil compartment of the oil pressure servos 11 and 13 without providing seal rings between, for example, the input shaft 2 and the oil pressure servos 11 and 13. Further, the oil pressure servo 12 can supply oil from the boss unit 3b provided from the case 3, without passing through other units for example, in other words, cansupply oil by providing one set of the seal rings 83. Therefore, oil can be supplied simply by providing one set of the seal rings 81 and 82, 83 each for the oil pressure servos 11, 12, and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the transmitting member 30 rotates in a reverse rotation, and while the hub unit 24 that connects this clutch C2 and the sun gear S2 has the same rotation as the input shaft 2 by engaging this clutch C2, there may be cases wherein the rotation difference of the transmitting member 30 and the hub unit 24 becomes large, but because this clutch C2 is located on the opposite side of the planetary gear PR, via the planetary gear unit PU, the transmitting member 30 and the hub unit 24 can be configured apart from one another. Compared to the case wherein, for example, those parts come in contact due to a multi-axial construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, the automatic transmission device 1₄ according to the present embodiment is a transmission device that is directly coupled at fifth speed forward. Therefore, at first speed forward or fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. Further, the line for transmitting this reduced rotation is a part for rotating at a high speed for example when at sixth speed forward, and therefore, as in the above-mentioned Publication, if the construction links the drum of the clutch to the rotation component of the planetary gear unit, controllability is lost when engaging and releasing this clutch because the drum unit changes shape because of the centrifugal force due to the high revolutions. Therefore, it is an object of the present invention to provide an automatic transmission wherein the controllability of the clutch is not lost as a reduced rotation output means, even at a high speed revolution of the rotation component of the planetary gear unit.

Further, according to the automatic transmission device 1₃ according to the present embodiment, the clutch C1 links the input shaft 2 and the sun gear S1 so as to be capable of disengaging, therefore, compared with for example the case wherein the clutch C1 makes the ring gear R1 and the sun gear S3 capable of disengaging, the load on the clutch C1 can be reduced, and can prevent the loss of controllability of the clutch C1, and further, the clutch C1 can be made more compact.

Further, the drum-shaped member 21 of the clutch C1 is linked to the input shaft 2, and the hub unit 22 is linked to the sun gear S1 of the planetary gear PR, therefore, the hub unit 22 which has a smaller diameter than the drum-shaped member 21 can be linked for example with the sun gear S1 that rotates at a high revolution when at sixth speed forward, and compared to the case wherein the sun gear S1 is linked to the drum-shaped member, the centrifugal force can be reduced, and the decrease of controllability of the clutch C1 when engaging and releasing can be prevented.

### <Fifth Embodiment>

The fifth embodiment, which is a partial modification of the third embodiment will be described, with reference to Fig. 9. Fig. 9 is a schematic cross-sectional diagram illustrating the automatic transmission device of an automatic transmission relating to the fifth embodiment. Now, components of the fourth embodiment which are the same as those of the third embodiment will be denoted with the same reference numerals, and description thereof omitted, except for partial modifications.

As Fig. 9 illustrates, the automatic transmission device 1₅ of the automatic transmission relating to the fifth embodiment has a configuration wherein the clutch C1 is configured on the boss unit 3a rather than on the input shaft 2, compared to the automatic transmission device 1₃ of the automatic transmission of the third embodiment (see Fig. 5) .

With the automatic transmission device 1₅, the clutch C1 is disposed on the opposite side of the planetary gear unit PU as to the planetary gear PR (to the right in the drawing). The drum-shaped member 21 is disposed rotatably supported on the boss unit 3a extended form the case 3, and the inner circumference side of the front end of the drum-shaped member 21 of the clutch C1 is connected to the input shaft 21. Also, the friction plate 71 is disposed by splining at the inner circumference side of the front end of the drum-shaped member 21, and on the inner circumference side of the friction plate 71 of this clutch C1 is splined the hub unit 22 connected to the sun gear S1 of the planetary gear PR. The carrier CR1 of the planetary gear PR has the pinion Pa and the pinion Pb, the pinion Pb meshes with the above-mentioned ring gear R1, and the pinion Pa meshes with the sun gear S1 which is connected to the hub unit 22. The carrier CR1 is fixed to the case 3 through the side plate, and the ring gear R1 is connected with the transmitting member 30. The sun gear S3 of the planetary gear unit PU is connected to the other side of the transmitting member 30.

Also, the oil chamber "a" of the oil pressure servo 11 of the clutch C1 communicates with the oil path 91 of the boss unit 3a, and the oil path 91 communicates with an unshown oil pressure control device. In other words, because the above-mentioned oil pressure servo 11 is configured on the boss unit 3a, an oil line from the oil pressure control unit not illustrated to the oil chamber "a" of the oil pressure servo 11 is constructed by one set of seal rings 81 to seal between the boss unit 3a and the oil pressure servo 11.

The operations of the automatic transmission device 1₅ according to the above configuration are the same as those of the third embodiment (see Fig. 6 and Fig. 7), and according, description thereof will be omitted.

As described above, according to the automatic transmission device 1₅ relating to the present invention, the planetary gear PR and the clutch C1 are configured on one side in the axial direction of the planetary gear unit PU, and the clutch C2 and the clutch C3 are configured on the other side in the axial direction of the planetary gear unit PU. Therefore, an automatic transmission can be provided that will achieve six forward speeds and one reverse speed, with direct coupling at the fifth speed forward. For example, compared to the case wherein the clutch C2 or clutch C3 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C1 is configured on one side in the axial direction of the planetary gear unit PU, and the clutch C2 and the clutch C3 are configured on the other side in the axial direction of the planetary gear unit PU, therefore compared to the case wherein, for example, the three clutches C1, C2, and C3 are configured on one side of the planetary gear unit PU, the construction of an oil line (for example, 2a, 2b, 91, 93, 94) to provide oil to the oil pressure servos 11, 12, and 13 for these clutches C1, C2, and C3 can be made easily, and the manufacturing process can be simplified and the costs brought down.

Further, because the oil pressure servos 11 and 13 are provided on the input shaft 2, one set of the seal rings 81 and 82 seal the case 3 and supply oil to the oil lines 2a, and 2b provided within the input shaft 2, and therefore oil can be supplied to the oil compartment of the oil pressure servos 11 and 13 without providing seal rings between, for example, the input shaft 2 and the oil pressure servos 11 and 13. Further, the oil pressure servo 12 can supply oil from the boss unit 3b provided from the case 3, without passing through other units for example, in other words, can supply oil by providing one set of the seal rings 83. Therefore, oil can be supplied simply by providing one set of the seal rings 81 and 82, 83 each for the oil pressure servos 11, 12, and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the transmitting member 30 rotates in a reverse rotation, and while the hub unit 24 that connects this clutch C2 and the sun gear S2 has the same rotation as the input shaft 2 by engaging this clutch C2, there may be cases wherein the rotation difference of the transmitting member 30 and the hub unit 24 becomes large, but because this clutch C2 is located on the opposite side of the planetary gear PR, via the planetary gear unit PU, the transmitting member 30 and the hub unit 24 can be configured apart from one another. Compared to the case wherein, for example, those parts come in contact due to a multi-axial construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, the automatic transmission device 1₄ according to the present embodiment is a transmission device that is directly coupled at fifth speed forward. Therefore, at first speed forward or fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. Further, the line for transmitting this reduced rotation is a part for rotating at a high speed for example when at sixth speed forward, and therefore, as in the above-mentioned Publication, if the construction links the drum of the clutch to the rotation component of the planetary gear unit, controllability is lost when engaging and releasing this clutch because the drum unit changes shape because of the centrifugal force due to the high revolutions. Therefore, it is an object of the present invention to provide an automatic transmission wherein the controllability of the clutch is not lost as a reduced rotation output means, even at a high speed revolution of the rotation component of the planetary gear unit.

Further, according to the automatic transmission device 1₅ according to the present embodiment, the clutch C1 links the input shaft 2 and the sun gear S1 so as to be capable of disengaging, therefore, compared with for example the case wherein the clutch C1 makes the ring gear R1 and the sun gear S3 capable of disengaging, the load on the clutch C1 can be reduced, and can prevent the loss of controllability of the clutch C1, and further, the clutch C1 can be made more compact.

Further, the clutch C1 is configured on the boss unit 3a where the oil path 91 from the oil pressure control device is formed, and accordingly, the automatic transmission 15 can be can be made more compact in the axial direction as compared with the case wherein the clutch C1 is configured on the input shaft 2, for example (see Fig. 5).

Further, the drum-shaped member 21 of the clutch C1 is linked to the input shaft 2, and the hub unit 22 is linked to the sun gear S1 of the planetary gear PR, therefore, the hub unit 22 which has a smaller diameter than the drum-shaped member 21 can be linked for example with the sun gear S1 that rotates at a high revolution when at sixth speed forward, and compared to the case wherein the sun gear S1 is linked to the drum-shaped member, the centrifugal force can be reduced, and the decrease of controllability of the clutch C1 when engaging and releasing can be prevented.

### <Sixth Embodiment>

Next, the sixth embodiment, which is a partial modification of the first embodiment, will be described, with reference to Fig. 10 through Fig. 12. Fig. 10 is a schematic cross-sectional diagram illustrating the automatic transmission device of an automatic transmission relating to the sixth embodiment, Fig. 11 is a operational table of an automatic transmission relating to the sixth embodiment, and Fig. 12 is a speed line diagram of an automatic transmission relating to the sixth embodiment. Now, components of the sixth embodiment which are the same as those of the first embodiment will be denoted with the same reference numerals, and description thereof omitted, except for partial modifications.

As Fig. 10 illustrates, the automatic transmission device 1₆ of the automatic transmission relating to the fourth embodiment configures a brake B3 (the reduced rotation output means, the third engaging component, the third brake) in place of the clutch C1, and changed the carrier CR1 of the planetary gear PR so as to be capable of being fixed by the brake B3, compared to that of the automatic transmission device 1₁ of the automatic transmission of the first embodiment (see Fig. 1).

The brake B3 is configured on the opposite side of the planetary gear unit PU (right side of diagram) of the planetary gear PR within this automatic transmission device 1₆. This brake B3 comprises an oil pressure servo 16, a friction plate 76, and a hub unit 33.

The hub unit 33 of this brake B3 is connected to one side plate of the carrier CR1, and this carrier CR1 is supported by the input shaft 2 or the boss unit 3a so as to be capable of rotating. Further, the sun gear S1 is connected to the input shaft 2. Also, this ring gear R1 is connected to the transmitting member 30, and the sun gear S3 is connected via this transmitting member 30.

Continuing, based on the above-mentioned construction, the operations of the automatic transmission device 1₆ will be described, following Fig. 10, Fig. 11, and Fig. 12 below. Now, similar to the above-described first embodiment, the vertical axis of the speed line diagram illustrated in Fig. 12 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 12) corresponds to the sun gear S3, and hereafter moving to the left direction within the diagram, the vertical axis corresponds to the ring gear R3, the carrier CR2, and the sun gear S2. Further, regarding the planetary gear PR section of this speed line diagram, the vertical axis to the farthest horizontal edge (the right side of Fig. 12) corresponds to the sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in a horizontal direction within the diagram illustrate that the rotation is transmitted from the transmitting member 30.

As illustrated in Fig. 10, the above-mentioned carrier CR1 is fixed to the case 3 by the brake B3 retaining. Further, the rotation of the input shaft 2 is input to the sun gear S1, the above-mentioned ring gear R1 decreases rotation speed based on the rotation of the input shaft 2 that is input to this sun gear S1, by this carrier CR1 being fixed. In other words, the reduced rotation of the ring gear R1 is input to the sun gear S3 via the transmitting member 30, by engaging the brake B3.

By doing so, as Fig. 11 and Fig. 12 illustrate, regarding the planetary gear PR, at first speed forward, second speed forward, third speed forward, and fourth speed forward, the rotation of the input shaft 2 is input to the sun gear S1 by retaining the brake B3, the carrier CR1 is fixed, and the reduced rotation is output to the ring gear R3 by the rotation of the sun gear S1 wherein the rotation of the input shaft 2 is input, and the reduced rotation is input to the sun gear S3 via the transmitting member 30. In this case, the ring gear R1 and the sun gear S3 are rotating at reduced speed, therefore the above-mentioned transmitting member 30 performs a relatively large torque transmission. On the other hand, at fifth speed forward, sixth speed forward, and first speed reverse, the rotation of the sun gear S3 is input to the ring gear R1 via the transmitting member 30, and further, because the brake B3 is released, as Fig. 12 illustrates, the carrier CR1 rotates based on each rotation within the speed level of this ring gear R1 and the sun gear S1 of the rotation of the input shaft 2.

Now, the actions other than those of the above-mentioned planetary gear PR are similar to those of the above-described first embodiment, and accordingly, description thereof will be omitted.

As described above, according to the automatic transmission device 1₆ relating to the present invention, the planetary gear PR and the brake B3 are configured on one side in the axial direction of the planetary gear unit PU, and the clutch C2 and the clutch C3 are configured on the other side in the axial direction of the planetary gear unit PU. Therefore, an automatic transmission can be provided that will achieve six forward speeds and one reverse speed, with direct coupling at fifth speed forward. For example, compared to the case wherein the clutch C2 or clutch C3 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, because the oil pressure servo 13 is provided on the input shaft 2, one set of the seal rings 82 seal the case 3 and supply oil to the oil lines 2b provided within the input shaft 2, and therefore oil can be supplied to the oil compartment of the oil pressure servos 13 without providing seal rings between, for example, the input shaft 2 and the oil pressure servos 13. Further, the oil pressure servo 12 can supply oil from the boss unit 3b provided from the case 3, without passing through other units for example, in other words, can supply oil by providing one set of the seal rings 83. Therefore, oil can be supplied simply by providing one set of the seal rings 82 and 83 each for the oil pressure servos 12 and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the transmitting member 30 rotates in a reverse rotation, and while the hub unit 24 that connects this clutch C2 and the sun gear S2 has the same rotation as the input shaft 2 by engaging this clutch C2, there may be cases wherein the rotation difference of the transmitting member 30 and the hub unit 24 becomes large, but because this clutch C2 is located on the opposite side of the planetary gear PR, via the planetary gear unit PU, the transmitting member 30 and the hub unit 24 can be configured apart from one another. Compared to the case wherein, for example, those parts come in contact due to a multi-axial construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, because the reduced rotation output to the planetary gear unit PU from the planetary gear PR is made to engage and disengage by the brake B3, the number of parts (for example drum-shaped members and so forth) can be reduced compared to the case wherein, for example, a clutch C1 is provided. Further, the brake B3 can configure an oil line directly from the case 3, and therefore the construction of an oil line can be simplified compared to the case wherein, for example, a clutch C1 is provided.

Further, the automatic transmission device 1₆ according to the present embodiment is a transmission device that is directly coupled at fifth speed forward. Therefore, at first speed forward or fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. Further, the line for transmitting this reduced rotation is a part for rotating at a high speed for example when at sixth speed forward, and therefore, as in the above-mentioned Publication, if the construction links the drum of the clutch to the rotation component of the planetary gear unit, controllability is lost when engaging and releasing this clutch because the drum unit changes shape because of the centrifugal force due to the high revolutions. Therefore, it is an object of the present invention to provide an automatic transmission wherein the controllability of the clutch is not lost as a reduced rotation output means, even at a high speed revolution of the rotation component of the planetary gear unit.

Therefore, according to the automatic transmission device 1₆ relating to the present embodiment, the carrier CR1 is fixed by the brake B3, and therefore, compared to the case wherein the clutch that makes ring gear R1 and the sun gear S3 capable of disengaging, the load on the brake B3 can be reduced, this brake B3 can be made more compact, and the automatic transmission can also be made more compact.

Now, the above first through sixth embodiments relating to the present invention have been described as being applicable to an automatic transmission having a torque converter, but should not be limited to this, and any motion starting device may be used that would transmit the torque (rotation) at start of movement. Further, a case wherein this is mounted on a vehicle with an engine as a drive source has been described, but should not be limited to this, and any drive source may be used as a matter of course, and this may be mounted on a hybrid vehicle. Further, the above-mentioned automatic transmission is favorable for use in a FF vehicle, but should not be limited to this, and can be used in a FR vehicle, a four-wheel drive vehicle, or vehicles with other types of drive systems.

Further, regarding the reducing planetary gear according to the above first through sixth embodiments has been described as one that reduces rotation speed of the ring gear by fixing the carrier while inputting the rotation of the input shaft into the sun gear, but should not be limited to this, and may reduce rotation speed of the ring gear by fixing the sun gear while inputting the rotation of the input shaft into the carrier.

### Industrial Applicability

As described above, the automatic transmission according to the present invention is beneficial mounted on vehicles such as automobiles, trucks, busses, and so forth, and is particularly suitable for use with vehicles which require reduction in size and reduction in weight from mountability to the vehicle, and further require reduction in shock of changing speeds.

## Claims

1. An automatic transmission comprising:
an input shaft (2) that rotates based on output rotation of a drive source;
a planetary gear unit (PU) comprising first, second, third, and fourth rotation components (S3, S2, CR2, R3);
reduced rotation output means (PR) capable of output of a reduced rotation to said first rotation component (S3) from said input shaft (2) wherein the rotation speed is reduced;
a first clutch (C2) that links said input shaft (2) and said second rotation component (S2) in a manner capable of disengaging;
a second clutch (C3) that links said input shaft (2) and said third rotation component (CR2) in a manner capable of disengaging; and
an output unit (5) for outputting the rotation of said fourth rotation component (R3) into a drive wheel transmitting device;
wherein at least five forward speed levels and one reverse speed level can be achieved, and wherein a direct linking level can be achieved wherein the rotations of the input shaft (2) are output without change by said first clutch (C2) and said second clutch (C3) being engaged while at fifth speed forward at least, or higher;
wherein said reduced rotation output means (PR) is configured on one side in the axial direction of said planetary gear unit (PU), and said output member (5) is configured between said planetary gear unit and said reduced rotation output means;
wherein said first clutch (C2) and said second clutch (C3) are configured on the other side in the axial direction of said planetary gear unit
and wherein said planetary gear unit (PU) is a multiple type planetary gear, comprising a first sun gear (S2), a long pinion (PL) which meshes with said first sun gear (S2), a short pinion (PS) which meshes with said long pinion (PL), a carrier (CR2) for rotationally supporting said long pinion (PL) and said short pinion (PS), a second sun gear (S3) meshing with said short pinion (PS), and a ring gear (R3) meshing with said long pinion (PL);
**characterized in that**
said first rotation component is said second sun gear (S3) capable of inputting the reduced rotation of said reduced rotation output means (PR);
and wherein said second rotation component is said first sun gear (S2) capable of inputting rotations of said input shaft (2) by the engaging of said first clutch (C2), and which is capable of being fixed by the retaining of a first brake (B2);
and wherein said third rotation component is said carrier (CR2) capable of inputting the rotations of said input shaft (2) by the engaging of said second clutch (C3), and which is capable of being fixed by the retaining of a second brake (B1);
and wherein said fourth rotation component is said ring gear (R3) linked to said output member (5).

2. An automatic transmission according to Claim 1, wherein said reduced rotation output means (PR) comprises a reducing planetary gear that has a reduced rotation component that rotates at said reduced rotation and a third engaging component (C1) that can operate the rotation of the specified component of this reducing planetary gear.

3. An automatic transmission according to either Claim 1 or 2, wherein said third engaging component (C1) is an engaging component which engages in said first speed forward.

4. An automatic transmission according to either Claim 2 or 3, wherein said reducing planetary gear (PR) comprises an input rotation component that inputs at all times the rotation of said input shaft (2), a rotation fixing component that fixes the rotation, and a reduced rotation component that can reduce rotation speed based on the rotation of this input rotation component and this rotation fixing component;
and wherein said third engaging component is a third clutch (C1) that links said reduced rotation component and said first rotation component (S3) so as to be capable of disengaging.

5. An automatic transmission according to Claim 4, wherein said third clutch (C1) is configured on the opposite side in the axial direction of said reducing planetary gear unit (PR) from said planetary gear unit;
and wherein said third clutch (C1) comprises an oil pressure servo (11) that pressurizes a friction member (71), a drum unit (21) that is constructed integrally with said oil pressure servo (11) and opens toward the direction of said reducing planetary gear unit (PR), and a hub unit (31);
and wherein the oil pressure servo (11) of said third clutch (C1) is disposed on a boss portion (3a) extending from a case (3), and oil is supplied to said oil pressure servo (11) from an oil path (91;92) provided to said boss portion (3a).

6. An automatic transmission according to either Claim 2 or 3, wherein said reducing planetary gear unit (PR) comprises an input rotation component that can input the rotation of said input shaft, a rotation fixing component that fixes the rotation, and a reduced rotation component that can reduce rotation speed based on the rotation of this input rotation component and this rotation fixing component;
and wherein said third engaging component is a third clutch (C1) that links said input shaft (2) and said input rotation component so as to be capable of disengaging.

7. An automatic transmission according to Claim 6,
wherein said third clutch (C1) comprises an oil pressure servo (11) that pressurizes a friction member (71), a drum unit (21) that is constructed integrally with said oil pressure servo (11), and a hub unit (31);
and wherein said hub unit (31) is linked with said input rotation component;
and wherein said drum unit (21) is linked to said input shaft (2), and is positioned so as to open toward the direction of said reducing planetary gear unit (PR).

8. An automatic transmission according to Claim 7,
wherein the oil pressure servo (11) of said third clutch (C1) is disposed on said input shaft (2);
and wherein oil is supplied to the oil pressure servo (11) of said third clutch (C1) via an oil path (2a;91;92) provided within said input shaft (2).

9. An automatic transmission according to Claim 7,
wherein the oil pressure servo (11) of said third clutch (C1) is disposed on a boss portion (3a) extending from a case (3);
and wherein oil is supplied to the oil pressure servo (11) of said third clutch (C1) via an oil path (91;92) provided within said boss portion (3a).

10. An automatic transmission according to either Claim 2 or 3, wherein said reducing planetary gear (PR) comprises an input rotation component that inputs the rotation of said input shaft (2), a fixing rotation component that fixes the rotation, and a reduced rotation component that can reduce rotation speed based on the rotation of the input rotation component and the rotation fixing component;
and wherein said third engaging component is a third brake (B3) that is capable of fixing said fixing rotation component.

11. An automatic transmission according to Claim 10,
wherein said third brake (B3) is configured on the opposite side in the axial direction of said reducing planetary gear unit (PR) from said planetary gear unit;
and wherein the oil pressure servo (16) of said third brake (B3) is configured on the edge wall of a case (3).

12. An automatic transmission according to any one of the Claims 1 through 11, wherein said first clutch (C2) is a clutch that engages at said first speed reverse.

13. An automatic transmission according to Claim 12,
wherein said first clutch (C2) is configured adjoined to said planetary gear unit (PU);
and wherein said first clutch (C2) comprises a friction member (72) and an oil pressure servo (12) that pressurizes this friction member (72), and a drum unit (23) and a hub unit (24) that are constructed integrally with this oil pressure servo (12);
and wherein said drum unit (23) is linked with said input shaft (2), and said hub unit (24) is linked with said second rotation component (S2);
and wherein said second clutch (C3) is configured on the opposite side in the axial direction of said reducing planetary gear unit (PR) from said first clutch (C2);
and wherein said second clutch (C3) comprises a friction member (73) and an oil pressure servo (13) that pressurizes this friction member (73), and a drum unit (25) and a hub unit (26) that are constructed integrally with this oil pressure servo (13);
and wherein said drum unit (25) is linked with said input shaft (2), and said hub unit (26) is linked with said third rotation component (CR2) through the outer circumference side of said first clutch (C2).

14. An automatic transmission according to Claim 13, wherein said first brake (B2) is capable of retaining rotations of said second rotation component (S2) and said second brake (B1) is capable of retaining rotations of said third rotation component (CR2);
wherein said first brake (B2) is configured on the outer circumference side of said first clutch (C2);
and wherein said second brake (B1) is configured on the outer circumference side of said planetary gear unit (PU).

15. An automatic transmission according to Claim 14,
wherein said first brake (B2) comprises a friction member (75) and an oil pressure servo (15) that pressurizes this friction member;
and wherein the oil pressure servo (15) of said first brake (B2) is configured at the outer circumference side in the radial direction of the oil pressure servo (12) of said first clutch (C2), at a position so as to overlap at least a part in the axial direction;
and wherein the friction member (75) of said first brake (B2) is linked to the case (3) and the hub unit (24) of said first clutch (C2).

16. An automatic transmission according to Claim 15,
wherein said second brake (B1) comprises a friction member (74) and an oil pressure servo (14) that pressurizes this friction member (74);
and wherein the oil pressure servo (14) of said second brake (B1) is disposed on case material extended so as to rotatably support said output member;
and wherein the friction member (74) of said second brake (B1) is disposed on the outer circumference side of said planetary gear unit (PU).

17. An automatic transmission according to any one of the Claims 2 through 16, wherein a transmitting member that links the reduced rotation component of said planetary gear or said third engaging component (C1) and the first rotation component (S3) of said planetary gear unit (PU) is linked together while passing through the inner circumference side of said output unit (5).

18. An automatic transmission according to any one of the Claims 1 through 17, further comprising a differential unit for outputting rotations to driving wheels, and a counter shaft unit for engaging said differential unit, wherein said output member is a counter gear (5) meshing with said counter shaft unit.

19. An automatic transmission according to any one of the Claims 1 through 18, wherein, in a speed line chart illustrating the revolutions of said first, second, third, and fourth rotation components (S3, S2, CR2, R3) with the vertical axis, and the gear ratio of said first, second, third, and fourth rotation components (S3, S2, CR2, R3) with the horizontal axis in a corresponding manner;
said first rotation component (S3) to which said reduced rotation is input is positioned at the farthest edge in the horizontal direction, with said fourth rotation component (R3) linked to said output member (5), said third rotation component (CR2), and said second rotation component (S2), corresponding in that order.

20. An automatic transmission according to any one of Claims 1 to 19, wherein, in the first speed forward, reduced rotation is input to said first rotation component (S3) from said reduced rotation output means (PR), and said second brake (B1) is retained;
and wherein, in the second speed forward, reduced rotation is input to said first rotation component (S3) from said reduced rotation output means (PR), and said first brake (B2) is retained;
and wherein, in the third speed forward, reduced rotation is input to said first rotation component (S3) from said reduced rotation output means (PR), and said first clutch (C2) is engaged;
and wherein, in the fourth speed forward, reduced rotation is input to said first rotation component (S3) from said reduced rotation output means (PR), and said second clutch (C3) is engaged;
and wherein, in the fifth speed forward, said first clutch (C2) and said second clutch (C3) are both engaged;
and wherein, in the sixth speed forward, said second clutch (C3) is engaged and said first brake (B2) is retained;
and wherein, in the first speed reverse, said first clutch (C2) is engaged and said second brake (B1) is retained;
whereby six forward speed levels and one reverse speed level can be achieved.

## Patentansprüche

1. Automatikgetriebe mit:
einer Eingangswelle (2), die sich entsprechend dem Ausgang der Antriebsquelle dreht;
einer Planetengetriebeeinheit (PU) mit ersten, zweiten, dritten und vierten Drehkomponenten (S3, S2, CR2, R3);
einer eine verminderte Drehzahl ausgebenden Einrichtung (PR), die eine verminderte Drehzahl von der Eingangswelle (2) an die erste Drehkomponente (S3) ausgeben kann, wobei die Drehzahl reduziert wird,
einer ersten Kupplung (C2), die die Eingangswelle (2) und die zweite Drehkomponente (S2) lösbar verbindet;
einer zweiten Kupplung (C3), die die Eingangswelle (2) und die dritte Drehkomponente (CR2) lösbar verbindet; und
einer Abtriebseinheit (5) zum Ausgeben der Drehzahl der vierten Drehkomponente (R3) an eine die Drehzahl auf das Antriebsrad übertragende Einrichtung;
wobei mindestens fünf Vorwärtsgangstufen und eine Rückwärtsgangstufe erreicht werden können, und wobei ein Direktkupplungszustand erreicht werden kann, bei dem die Drehzahlen der Eingangswelle (2) unverändert über die sich mindestens in der fünften oder einer höheren Vorwärtsgangstufe in Eingriff befindende erste Kupplung (C2) und zweite Kupplung (C3) ausgegeben werden;
wobei die die verminderte Drehzahl ausgebende Einrichtung (PR) in Axialrichtung der Planetengetriebeeinheit (PU) gesehen an einer Seite ausgebildet ist, und das Abtriebselement (5) zwischen der Planetengetriebeeinheit und der die verminderte Drehzahl ausgebenden Einrichtung ausgebildet ist;
wobei die erste Kupplung (C2) und die zweite Kupplung (C3) in Axialrichtung der Planetengetriebeeinheit gesehen an der anderen Seite ausgebildet sind;
und wobei die Planetengetriebeeinheit (PU) ein mehrstufiges Planetengetriebe ist, mit einem ersten Sonnenrad (S2), einem langen Ritzel (PL), das mit dem ersten Sonnenrad (S2) kämmt, einem kurzen Ritzel (PS), das mit dem langen Ritzel (PL) kämmt, einem Träger (CR2) zum drehbaren Lagern des langen Ritzels (PL) und des kurzen Ritzels (PS), einem zweiten Sonnenrad (S3), das mit dem kurzen Ritzel (PS) kämmt und einem Hohlrad (R3), das mit dem langen Ritzel (PL) kämmt;
**dadurch gekennzeichnet, dass**
die erste Drehkomponente das zweite Sonnenrad (S3) ist, das die verminderte Drehzahl der die verminderte Drehzahl ausgebenden Einrichtung (PR) zuführen kann;
und wobei die zweite Drehkomponente das erste Sonnenrad (S2) ist, das durch das Eingreifen der ersten Kupplung (C2) Drehzahlen der Eingangswelle (2) zuführen kann, und das durch Halten einer ersten Bremse (B2) festgelegt werden kann;
und wobei die dritte Drehkomponente der Träger (CR2) ist, der durch das Eingreifen der zweiten Kupplung (C3) Drehzahlen der Eingangswelle (2) zuführen kann, und der durch Halten einer zweiten Bremse (B 1) festgelegt werden kann;
und wobei die vierte Drehkomponente das Hohlrad (R3) ist, das mit der Abtriebselement (5) verbunden ist.

2. Automatikgetriebe nach Anspruch 1, wobei die die verminderte Drehzahl ausgebende Einrichtung (PR) ein Untersetzungsplanetengetriebe ist, das eine die Drehzahl untersetzende Komponente, die sich mit der verminderten Drehzahl dreht, und eine dritte eingreifende Komponente (C1) hat, die die Drehbewegung der bestimmten Komponente dieses Untersetzungsplanetengetriebes schalten kann.

3. Automatikgetriebe nach Anspruch 1 oder 2, wobei die dritte eingreifende Komponente (C1) eine in den ersten Vorwärtsgang eingreifende Komponente ist.

4. Automatikgetriebe nach Anspruch 2 oder 3, wobei das Untersetzungsplanetengetriebe (PR) eine Eingangsdrehzahl-Komponente aufweist, die zu jeder Zeit die Drehzahl der Eingangswelle (2) zuführt, eine die Drehzahl festlegende Komponente, die die Drehzahl festlegt, und eine die Drehzahl untersetzende Komponente, die basierend auf der Drehzahl der Eingangsdrehzahl-Komponente und der diese Drehzahl festlegenden Komponente die Drehzahl vermindern kann;
und wobei die dritte eingreifende Komponente eine dritte Kupplung (C1) ist, welche die die Drehzahl untersetzende Komponente und die erste Drehkomponente (S3) lösbar miteinander verbindet.

5. Automatikgetriebe nach Anspruch 4, wobei die dritte Kupplung (C1) an der in Axialrichtung der Untersetzungsplanetengetriebeeinheit (PR) gesehen der Untersetzungsplanetengetriebeeinheit gegenüberliegenden Seite ausgebildet ist,
und wobei die dritte Kupplung (C1) ein Öldruck-Servoelement (11), das ein Reibelement (71) unter Druck setzt, eine Trommeleinheit (21), die integral mit dem Öldruck-Servoelement (11) aufgebaut ist und sich in Richtung zur Untersetzungsplanetengetriebeeinheit (PR) öffnet, und eine Nabeneinheit (31) aufweist;
und wobei das Öldruck-Servoelement (11) der dritten Kupplung (C1) an einem sich von einem Gehäuse (3) erstreckenden Vorsprungabschnitt (3a) angeordnet ist, und das Öldruck-Servoelement (11) mit Öl von einer Ölleitung (91; 92) versorgt wird, die am Vorsprungabschnitt (3a) vorgesehen ist.

6. Automatikgetriebe nach Anspruch 2 oder 3, wobei die Untersetzungsplanetengetriebeeinheit (PR) eine Eingangsdrehzahl-Komponente aufweist, die die Drehzahl der Eingangswelle zuführen kann, eine die Drehzahl festlegende Komponente, die die Drehzahl festlegt, und eine die Drehzahl untersetzende Komponente, die basierend auf der Drehzahl der Eingangsdrehzahl-Komponente und der diese Drehzahl festlegenden Komponente die Drehzahl vermindern kann;
und wobei die dritte eingreifende Komponente eine dritte Kupplung (C1) ist, die die Eingangswelle (2) und die Eingangsdrehzahl-Komponente lösbar miteinander verbindet.

7. Automatikgetriebe nach Anspruch 6, wobei die dritte Kupplung (C1) ein Öldruck-Servoelement (11), das ein Reibelement (71) unter Druck setzt, eine Trommeleinheit (21), die integral mit dem Öldruck-Servoelement (11) aufgebaut ist, und eine Nabeneinheit (31) aufweist;
und wobei die Nabeneinheit (31) mit der Eingangsdrehzahl-Komponente verbunden ist;
und wobei die Trommeleinheit (21) mit der Eingangswelle (2) verbunden ist, und positioniert ist, um sich in Richtung zur Untersetzungsplanetengetriebeeinheit (PR) zu öffnen.

8. Automatikgetriebe nach Anspruch 7, wobei das Öldruck-Servoelement (11) der dritten Kupplung (C1) an der Eingangswelle (2) angeordnet ist;
und wobei das Öldruck-Servoelement (11) der dritten Kupplung (C1) über eine in der Eingangswelle (2) vorgesehene Ölleitung (2a; 91; 92) mit Öl versorgt wird.

9. Automatikgetriebe nach Anspruch 7, wobei das Öldruck-Servoelement (11) der dritten Kupplung (C1) an einem sich von einem Gehäuse (3) erstreckenden Vorsprungabschnitt (3a) angeordnet ist;
und wobei das Öldruck-Servoelement (11) der dritten Kupplung (C1) über eine im Vorsprungabschnitt (3a) vorgesehene Ölleitung (91; 92) mit Öl versorgt wird.

10. Automatikgetriebe nach Anspruch 2 oder 3, wobei das Untersetzungsplanetengetriebe (PR) eine Eingangsdrehzahl-Komponente aufweist, die die Drehzahl der Eingangswelle (2) zuführt, eine die Drehzahl festlegende Komponente, die die Drehzahl festlegt, und eine die Drehzahl untersetzende Komponente, die basierend auf der Drehzahl der Eingangsdrehzahl-Komponente und der die Drehzahl festlegenden Komponente die Drehzahl vermindern kann;
und wobei die dritte eingreifende Komponente eine dritte Bremse (B3) ist, welche die die Drehzahl festlegende Komponente festlegen kann.

11. Automatikgetriebe nach Anspruch 10, wobei die dritte Bremse (B3) an der in Axialrichtung der Untersetzungsplanetengetriebeeinheit (PR) gesehen der Untersetzungsplanetengetriebeeinheit gegenüberliegenden Seite ausgebildet ist;
und wobei das Öldruck-Servoelement (16) der dritten Bremse (B3) an der Begrenzungswand eines Gehäuses (3) ausgebildet ist.

12. Automatikgetriebe nach einem der Ansprüche 1 bis 11, wobei die erste Kupplung (C2) beim ersten Rückwärtsgang eingreift.

13. Automatikgetriebe nach Anspruch 12, wobei die erste Kupplung (C2) an die Planetengetriebeeinheit (PU) angrenzend ausgebildet ist;
und wobei die erste Kupplung (C2) ein Reibelement (72) und ein Öldruck-Servoelement (12), das das Reibelement (72) unter Druck setzt, und eine Trommeleinheit (23) und eine Nabeneinheit (24), die integral mit dem Öldruckservoelement (12) aufgebaut sind, aufweist;
und wobei die Trommeleinheit (23) mit der Eingangswelle (2) verbunden ist, und die Nabeneinheit (24) mit der zweiten Drehkomponente (S2) verbunden ist;
und wobei die zweite Kupplung (C3) an der in Axialrichtung der Untersetzungsplanetengetriebeeinheit (PR) gesehen der ersten Kupplung (C2) gegenüberliegenden Seite ausgebildet ist;
und wobei die zweite Kupplung (C3) ein Reibelement (73) und ein Öldruck-Servoelement (13), das das Reibelement (73) unter Druck setzt, und eine Trommeleinheit (25) und eine Nabeneinheit (26), die integral mit dem Öldruck-Servoelement (13) aufgebaut sind, aufweist;
und wobei die Trommeleinheit (25) mit der Eingangswelle (2) verbunden ist, und die Nabeneinheit (26) über die äußere Umfangsseite der ersten Kupplung (C2) mit der dritten Drehkomponente (CR2) verbunden ist.

14. Automatikgetriebe nach Anspruch 13, wobei die erste Bremse (B2) die Umdrehungen der zweiten Drehkomponente (S2) halten kann und die zweite Bremse (B1) die Umdrehungen der dritten Drehkomponente (CR2) halten kann;
wobei die erste Bremse (B2) an der äußeren Umfangsseite der ersten Kupplung (C2) ausgebildet ist;
und wobei die zweite Bremse (B1) an der äußeren Umfangsseite der Planetengetriebeeinheit (PU) ausgebildet ist.

15. Automatikgetriebe nach Anspruch 14, wobei die erste Bremse (B2) ein Reibelement (75) und ein Öldruck-Servoelememt (15) aufweist, das das Reibelement unter Druck setzt;
und wobei das Öldruck-Servoelement (15) der ersten Bremse (B2) in Radialrichtung des Öldruck-Servoelements (12) der ersten Kupplung (C2) gesehen an der äußeren Umfangsseite an einer Position ausgebildet ist, um in Axialrichtung mindestens einen Teil zu überlappen;
und wobei das Reibelement (75) der ersten Bremse (B2) mit dem Gehäuse (3) und der Nabeneinheit (24) der ersten Kupplung (C2) verbunden ist.

16. Automatikgetriebe nach Anspruch 15, wobei die zweite Bremse (B1) ein Reibelement (74) und ein Öldruck-Servoelement (14) aufweist, das dieses Reibelement (74) unter Druck setzt;
und wobei das Öldruck-Servoelement (14) der zweiten Bremse (B1) am Gehäusematerial angeordnet ist, das verlängert ist, um das Abtriebselement drehbar zu halten,
und wobei das Reibelement (74) der zweiten Bremse (B1) an der Außenumfangsseite der Planetengetriebeeinheit (PU) angeordnet ist.

17. Automatikgetriebe nach einem der Ansprüche 2 bis 16, wobei ein Übertragungsglied, das die die Drehzahl untersetzende Komponente des Planetengetriebes oder die dritte eingreifende Komponente (C1) und die erste Drehkomponente (S3) der Planetengetriebeeinheit (PU) verbindet, zusammenhängend und die innere Umfangsseite der Abtriebseinheit (5) durchlaufend ausgebildet ist.

18. Automatikgetriebe nach einem der Ansprüche 1 bis 17, ferner mit einer Differentialeinheit zum Ausgeben von Drehzahlen an Antriebsräder, und einer Vorgelegewelle zum Eingriff in die Differentialeinheit, wobei das Abtriebselement ein mit der Vorgelegewelle kämmendes Vorgelegerad (5) ist.

19. Automatikgetriebe nach einem der Ansprüche 1 bis 18, wobei ein Drehzahldiagramm, die Umdrehungen der ersten, zweiten, dritten und vierten Drehkomponente (S3, S2, CR2, R3) auf der vertikalen Achse, und ein Übersetzungsverhältnis der ersten, zweiten, dritten und vierten Drehkomponente (S3, S2, CR2, R3) in entsprechender Weise auf der horizontalen Achse darstellt,
wobei die erste Drehkomponente (S3), in welche die verminderte Drehzahl eingegeben wird, an der in horizontaler Richtung am weitesten entfernt liegenden Kante angeordnet ist, wobei die vierte Drehkomponente (R3) mit dem Abtriebselement (5), der dritten Drehkomponente (CR2) und der zweiten Drehkomponente (S2) in dieser Reihenfolge verbunden ist.

20. Automatikgetriebe nach einem der Ansprüche 1 bis 19, wobei im ersten Vorwärtsgang eine verminderte Drehzahl von der eine verminderte Drehzahl ausgebenden Einrichtung (PR) der ersten Drehkomponente (S3) zugeführt wird, und die zweite Bremse (B1) gehalten wird;
und wobei im zweiten Vorwärtsgang eine verminderte Drehzahl von der eine verminderte Drehzahl ausgebenden Einrichtung (PR) der ersten Drehkomponente (S3) zugeführt wird, und die erste Bremse (B2) gehalten wird;
und wobei im dritten Vorwärtsgang eine verminderte Drehzahl von der eine verminderte Drehzahl ausgebenden Einrichtung (PR) der ersten Drehkomponente (S3) zugeführt wird, und die erste Kupplung (C2) in Eingriff ist;
und wobei im vierten Vorwärtsgang eine verminderte Drehzahl von der eine verminderte Drehzahl ausgebenden Einrichtung (PR) der ersten Drehkomponente (S3) zugeführt wird, und die zweite Kupplung (C3) in Eingriff ist;
und wobei im fünften Vorwärtsgang die erste Kupplung (C2) und die zweite Kupplung (C3) in Eingriff sind;
und wobei im sechsten Vorwärtsgang die zweite Kupplung (C3) in Eingriff ist und die erste Bremse (B2) gehalten wird;
und wobei im ersten Rückwärtsgang die erste Kupplung (C2) in Eingriff ist und die zweite Bremse (B1) gehalten wird;
womit sechs Vorwärtsgangstufen und eine Rückwärtsgangstufe erreicht werden können.

## Revendications

1. Transmission automatique :
un arbre d'entrée (2) qui tourne sur la base d'une rotation de sortie d'une source d'entraînement ;
une unité d'engrenage planétaire (PU) comportant des premier, deuxième, troisième, et quatrième composants de rotation (S3, S2, CR2, R3) ;
des moyens de sortie à rotation réduite (PR) capables de sortie de rotation réduite vers ledit premier composant de rotation (S3) depuis ledit arbre d'entrée (2) avec la vitesse de rotation qui est réduite ;
un premier embrayage (C2) qui relie ledit arbre d'entrée (2) et ledit deuxième composant de rotation (S2) d'une manière capable de désengagement ;
un deuxième embrayage (C3) qui relie ledit arbre d'entrée (2) et ledit troisième composant de rotation (CR2) d'une manière capable de désengagement ; et
une unité de sortie (5) pour la sortie de la rotation dudit quatrième composant de rotation (R3) dans un dispositif de transmission de roue motrice ;
dans laquelle au moins cinq niveaux vitesse en marche avant et un niveau vitesse en marche arrière peuvent être obtenus, et dans laquelle un niveau de liaison directe peut être obtenu avec les rotations de l'arbre d'entrée (2) qui sont sorties sans modification par ledit premier embrayage (C2) et ledit deuxième embrayage (C3) qui sont engagés en étant dans la cinquième vitesse en marche avant au moins, ou plus ;
dans laquelle lesdits moyens de sortie à rotation réduite (PR) sont configurés sur un côté dans la direction axiale de ladite unité d'engrenage planétaire (PU), et ledit élément de sortie (5) est configurée entre ladite unité d'engrenage planétaire et lesdits moyens de sortie à rotation réduite ;
dans laquelle ledit premier embrayage (C2) et ledit deuxième embrayage (C3) sont configurés de l'autre côté dans la direction axiale de ladite unité d'engrenage planétaire et dans laquelle ladite unité d'engrenage planétaire (PU) est un engrenage planétaire de type multiple, comportant un premier pignon central (S2), un pignon long (PL) qui est en prise avec ledit premier pignon central (S2), un pignon court (PS) qui est en prise avec ledit pignon long (PL), un support (CR2) destiné à supporter en rotation ledit pignon long (PL) et ledit pignon court (PS), un deuxième pignon central (S3) en prise avec ledit pignon court (PS), et une couronne dentée (R3) en prise avec ledit pignon long (PL) ;
**caractérisée en ce que**
ledit premier composant de rotation est ledit deuxième pignon central (S3) capable d'entrer la rotation réduite desdits moyens de sortie à rotation réduite (PR) ;
et dans laquelle ledit deuxième composant de rotation est ledit premier pignon central (S2) capable d'entrer des rotations dudit arbre d'entrée (2) grâce à l'engagement dudit premier embrayage (C2), et qui est capable d'être fixé par la retenue d'un premier frein (B2) ;
et dans laquelle ledit troisième composant de rotation est ledit support (CR2) capable d'entrer les rotations dudit arbre d'entrée (2) grâce à l'engagement dudit deuxième embrayage (C3), et qui est capable d'être fixé par la retenue d'un deuxième frein (B1) ;
et dans laquelle ledit quatrième composant de rotation est ladite couronne dentée (R3) reliée audit élément de sortie (5).

2. Transmission automatique selon la revendication 1, dans laquelle lesdits moyens de sortie à rotation réduite (PR) comportent un engrenage planétaire réducteur qui a un composant à rotation réduite qui tourne à ladite rotation réduite et un troisième composant d'engagement (C1) qui peut mettre en oeuvre la rotation du composant spécifique de cet engrenage planétaire réducteur.

3. Transmission automatique selon la revendication 1 ou 2, dans laquelle ledit troisième composant d'engagement (C1) est un composant d'engagement qui s'engage dans ladite première vitesse en marche avant.

4. Transmission automatique selon la revendication 2 ou 3, dans laquelle ledit engrenage planétaire réducteur (PR) comporte un composant de rotation d'entrée qui entre en permanence la rotation dudit arbre d'entrée (2), un composant de fixation de rotation qui fixe la rotation, et un composant à rotation réduite qui peut réduire la vitesse de rotation sur la base de la rotation de ce composant de rotation d'entrée et de ce composant de fixation de rotation ;
et dans laquelle ledit troisième composant d'engagement est un troisième embrayage (C1) qui relie ledit composant à rotation réduite et ledit premier composant de rotation (S3) de façon à être capables de se désengager.

5. Transmission automatique selon la revendication 4, dans laquelle ledit troisième embrayage (C1) est configuré sur le côté opposé dans la direction axiale de ladite unité réductrice d'engrenage planétaire (PR) par rapport à ladite unité d'engrenage planétaire ;
et dans laquelle ledit troisième embrayage (C1) comporte un servomoteur à pression d'huile (11) qui met en pression un élément de friction (71), une unité de tambour (21) qui est construite d'un seul tenant avec ledit servomoteur à pression d'huile (11) et s'ouvre vers la direction de ladite unité d'engrenage planétaire réducteur (PR) et une unité de moyeu (31) ;
et dans laquelle le servomoteur à pression d'huile (11) dudit troisième embrayage (C1) est disposé sur une partie de bossage (3a) s'étendant depuis un carter (3), et de l'huile est délivrée audit servomoteur à pression d'huile (11) depuis un passage d'huile (91 ; 92) prévu sur ladite partie de bossage (3a).

6. Transmission automatique selon la revendication 2 ou 3, dans laquelle ledit engrenage planétaire réducteur (PR) comporte un composant de rotation d'entrée qui peut entrer la rotation dudit arbre d'entrée, un composant de fixation de rotation qui fixe la rotation, et un composant à rotation réduite qui peut réduire la vitesse de rotation sur la base de la rotation de ce composant de rotation d'entrée et de ce composant de fixation de rotation ;
et dans laquelle ledit troisième composant d'engagement est un troisième embrayage (C1) qui relie ledit arbre d'entrée (2) et ledit composant de rotation d'entrée de façon à être capables de se désengager.

7. Transmission automatique selon la revendication 6, dans laquelle ledit troisième embrayage (C1) comporte un servomoteur à pression d'huile (11) qui met en pression un élément de friction (71), une unité de tambour (21) qui est construite d'un seul tenant avec ledit servomoteur à pression d'huile (11), et une unité de moyeu (31) ;
et dans laquelle ladite unité de moyeu (31) est reliée audit composant de rotation d'entrée ;
et dans laquelle ladite unité de tambour (21) est reliée audit arbre d'entrée (2) et est positionnée de façon à s'ouvrir vers la direction de ladite unité d'engrenage planétaire réducteur (PR).

8. Transmission automatique selon la revendication 7, dans laquelle le servomoteur à pression d'huile (11) dudit troisième embrayage (C1) est disposé sur ledit arbre d'entrée (2) ;
et dans laquelle de l'huile est délivrée au servomoteur à pression d'huile (11) dudit troisième embrayage (C1) par l'intermédiaire d'un passage d'huile (2a ; 91 ; 92) prévu dans ledit arbre d'entrée (2).

9. Transmission automatique selon la revendication 7, dans laquelle le servomoteur à pression d'huile (11) dudit troisième embrayage (C1) est disposé sur une partie de bossage (3a) s'étendant depuis un carter (3) ;
et dans laquelle de l'huile est délivrée au servomoteur à pression d'huile (11) dudit troisième embrayage (C1) par l'intermédiaire d'un passage d'huile (91 ; 92) prévu dans ladite partie de bossage (3a).

10. Transmission automatique selon la revendication 2 ou 3, dans laquelle ledit engrenage planétaire réducteur (PR) comporte un composant de rotation d'entrée qui entre la rotation dudit arbre d'entrée (2), un composant de fixation de rotation qui fixe la rotation, et un composant à rotation réduite qui peut réduire une vitesse de rotation sur la base de la rotation du composant de rotation d'entrée et du composant de fixation de rotation ;
et dans laquelle ledit troisième composant d'engagement est un troisième frein (B3) qui est capable de fixer ledit composant de fixation de rotation.

11. Transmission automatique selon la revendication 10, dans laquelle ledit troisième frein (B3) est configuré sur le côté opposé dans la direction axiale de ladite unité réductrice d'engrenage planétaire (PR) par rapport à ladite unité d'engrenage planétaire ;
et dans laquelle le servomoteur à pression d'huile (16) dudit troisième frein (B3) est configuré sur la paroi de bord d'un carter (3).

12. Transmission automatique selon l'une quelconque des revendications 1 à 11, dans laquelle ledit premier embrayage (C2) est un embrayage qui s'engage dans ladite première vitesse en marche arrière.

13. Transmission automatique selon la revendication 12, dans laquelle ledit premier embrayage (C2) est configuré de façon adjacente à ladite unité d'engrenage planétaire (PU) ;
et dans laquelle ledit premier embrayage (C2) comporte un élément de friction (72) et un servomoteur à pression d'huile (12) qui met en pression cet élément de friction (72), et une unité de tambour (23) et une unité de moyeu (24) qui sont construites d'un seul tenant avec ce servomoteur à pression d'huile (12) ;
et dans laquelle ladite unité de tambour (23) est reliée audit arbre d'entrée (2), et ladite unité de moyeu (24) est reliée audit deuxième composant de rotation (S2) ;
et dans laquelle ledit deuxième embrayage (C3) est configuré sur le côté opposé dans la direction axiale de ladite unité réductrice d'engrenage planétaire (PR) dudit premier embrayage (C2) ;
et dans laquelle ledit deuxième embrayage (C3) comporte un élément de friction (73) et un servomoteur à pression d'huile (13) qui met en pression cet élément de friction (73), et une unité de tambour (25) et une unité de moyeu (26) qui sont construites d'un seul tenant avec ce servomoteur à pression d'huile (13) ;
et dans laquelle ladite unité de tambour (25) est reliée audit arbre d'entrée (2), et ladite unité de moyeu (26) est reliée audit troisième composant de rotation (CR2) par l'intermédiaire du côté de circonférence extérieure dudit premier embrayage (C2).

14. Transmission automatique selon la revendication 13, dans laquelle ledit premier frein (B2) est capable de retenir des rotations dudit deuxième composant de rotation (S2) et ledit deuxième frein (B1) est capable de retenir des rotations dudit troisième composant de rotation (CR2) ;
dans laquelle ledit premier frein (B2) est configuré sur le côté de circonférence extérieure dudit premier embrayage (C2) ;
et dans laquelle ledit deuxième frein (B1) est configuré sur le côté de circonférence extérieure de ladite unité d'engrenage planétaire (PU).

15. Transmission automatique selon la revendication 14, dans laquelle ledit premier frein (B2) comporte un élément de friction (75) et un servomoteur à pression d'huile (15) qui met en pression cet élément de friction ;
et dans laquelle le servomoteur à pression d'huile (15) dudit premier frein (B2) est configuré sur le côté de circonférence extérieure dans la direction radiale du servomoteur à pression d'huile (12) dudit premier embrayage (C2), dans une position de façon à chevaucher au moins une partie dans la direction axiale ;
et dans laquelle l'élément de friction (75) dudit premier frein (B2) est relié au carter (3) et à l'unité de moyeu (24) dudit premier embrayage (C2).

16. Transmission automatique selon la revendication 15, dans laquelle ledit deuxième frein (B1) comporte un élément de friction (74) et un servomoteur à pression d'huile (14) qui met en pression cet élément de friction (74) ;
et dans laquelle le servomoteur à pression d'huile (14) dudit deuxième frein (B1) est disposé sur une matière de carter prolongée de façon à supporter de manière rotative ledit élément de sortie ;
et dans laquelle l'élément de friction (74) dudit deuxième frein (B1) est disposé sur le côté de circonférence extérieure de ladite unité d'engrenage planétaire (PU).

17. Transmission automatique selon l'une quelconque des revendications 2 à 16, dans laquelle un élément de transmission qui relie le composant à rotation réduite dudit engrenage planétaire ou ledit troisième composant d'engagement (C1) et le premier composant de rotation (S3) de ladite unité d'engrenage planétaire (PU) est relié tout en passant à travers le côté de circonférence intérieure de ladite unité de sortie (5).

18. Transmission automatique selon l'une quelconque des revendications 1 à 17, comportant en outre une unité de différentiel pour la sortie de rotations vers des roues motrices, et une unité de contre-arbre destinée à engager ladite unité de différentiel, dans laquelle ledit élément de sortie est un contre-pignon (5) en prise avec ladite unité de contre-arbre.

19. Transmission automatique selon l'une quelconque des revendications 1 à 18, dans laquelle, dans un diagramme de courbe de vitesse illustrant les rotations desdits premier, deuxième, troisième, et quatrième composants de rotation (S3, S2, CR2, R3) avec l'axe vertical, et le rapport d'engrenage desdits premier, deuxième, troisième, et quatrième composants de rotation (S3, S2, CR2, R3) avec l'axe horizontal d'une manière correspondante ;
ledit premier composant de rotation (S3) dans lequel ladite rotation réduite est entrée est positionné au niveau du bord le plus éloigné dans la direction horizontale, avec ledit quatrième composant de rotation (R3) relié audit élément de sortie (5), audit troisième composant de rotation (CR2) et audit deuxième composant de rotation (S2) correspondant dans cet ordre.

20. Transmission automatique selon l'une quelconque des revendications 1 à 19, dans laquelle, dans la première vitesse en marche avant, la rotation réduite est entrée dans ledit premier composant de rotation (S3) à partir desdits moyens de sortie à rotation réduite (PR), et ledit deuxième frein (B1) est serré ;
et dans laquelle, dans la deuxième vitesse en marche avant, la rotation réduite est entrée dans ledit premier composant de rotation (S3) à partir desdits moyens de sortie à rotation réduite (PR), et ledit premier frein (B2) est serré ;
et dans laquelle, dans la troisième vitesse en marche avant, la rotation réduite est entrée dans ledit premier composant de rotation (S3) à partir desdits moyens de sortie à rotation réduite (PR) et ledit premier embrayage (C2) est engagé ;
et dans laquelle, dans la quatrième vitesse en marche avant, la rotation réduite est entrée dans ledit premier composant de rotation (S3) à partir desdits moyens de sortie à rotation réduite (PR), et ledit deuxième embrayage (C3) est engagé ;
et dans laquelle, dans la cinquième vitesse en marche avant, ledit premier embrayage (C2) et ledit deuxième embrayage (C3) sont tous les deux engagés ;
et dans laquelle, dans la sixième vitesse en marche avant, ledit deuxième embrayage (C3) est engagé et ledit premier frein (B2) est serré ;
et dans laquelle, dans la première vitesse en marche arrière, ledit premier embrayage (C2) est engagé et ledit deuxième frein (B1) est serré ;
de sorte que six niveaux de vitesse en marche avant et un niveau de vitesse en marche arrière peuvent être obtenus.
